# EUROPEAN PATENT APPLICATION

(11) **EP 4 626 058 A1**
(43) Date of publication of application: **01.10.2025**
(21) Application number: 23905737.5
(22) Date of filing: 08.12.2023
(51) Int. Cl.: H04W 24/02

(54) **COMMUNICATION METHOD AND RELATED APPARATUS**

(30) Priority: 20.12.2022 CN 202211642720
(71) Applicant: Huawei Technologies Co., Ltd., Shenzhen, Guangdong 518129 (CN)
(72) Inventor: PENG, Jinlin, Shenzhen, Guangdong 518129 (CN); LI, Xinxian, Shenzhen, Guangdong 518129 (CN); ZHAI, Bangzhao, Shenzhen, Guangdong 518129 (CN)
(74) Representative: Pfenning, Meinig & Partner mbB
(86) International application number: PCT/CN2023/137466
(87) International publication number: WO 2024/131570

(57) **Abstract**

This application discloses a communication method, including: A terminal receives r pieces of cell configuration information of a first cell from a network device, where each of the r pieces of cell configuration information includes a capability parameter of the first cell, and the capability parameter of the first cell indicates a wireless communication capability that needs to be supported by the terminal in the first cell. The terminal receives an indication of first cell configuration information from the network device, where the first cell configuration information is one of the r pieces of cell configuration information, and the first cell configuration information includes a first capability parameter of the first cell. The terminal may determine, as the wireless communication capability that needs to be supported by the terminal in the first cell, a wireless communication capability that needs to be supported by the terminal in the first cell and that is indicated by the first capability parameter. According to the foregoing communication method, a wireless communication capability that needs to be supported by the terminal in at least one cell can be efficiently reconfigured, to improve network resource utilization.

## Description

This application claims priority to Chinese Patent Application No. 202211642720.9, filed with the China National Intellectual Property Administration on December 20, 2022 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

A frequency band or a band (band) is a frequency range, and has an upper-boundary frequency and a lower-boundary frequency. For example, 2496 MHz to 2690 MHz is a band, and 3.3 GHz to 4.2 GHz is also a band. In an existing network, a network device obtains a wireless communication capability of a terminal. For example, the network device may obtain at least one frequency band combination (each frequency band combination may include one or more frequency bands) that can be supported by the terminal and a wireless communication capability that can be supported by the terminal in each frequency band in each frequency band combination. The network device may configure or reconfigure, based on the wireless communication capability of the terminal, a wireless communication capability that needs to be supported by the terminal in at least one cell. The at least one cell may be referred to as a cell configured for the terminal. Specifically, for each wireless communication capability, when configuring or reconfiguring the wireless communication capability that needs to be supported by the terminal in the at least one cell, the network device sends a capability parameter for each of the at least one cell. The terminal sets the at least one received capability parameter to the wireless communication capability that needs to be supported by the terminal in the at least one cell.

In a conventional technology, when reconfiguring a wireless communication capability that needs to be supported by the terminal in the at least one cell, the network device needs to resend a capability parameter. Configuration efficiency is low. Consequently, a speed of adjusting the wireless communication capability that needs to be supported by the terminal in the cell may be low. Further, network resource utilization may be reduced.

### SUMMARY

This application provides a communication method and a related apparatus, so that a wireless communication capability that needs to be supported by a terminal in at least one cell can be efficiently reconfigured, to improve network resource utilization.

According to a first aspect, a communication method is provided. The method may be applied to a terminal or a chip in the terminal. The following uses the terminal as an example to describe the method. The method includes: The terminal receives r pieces of cell configuration information of a first cell from a network device, where r is a positive integer, each of the r pieces of cell configuration information includes a capability parameter of the first cell, and the capability parameter of the first cell indicates a wireless communication capability that needs to be supported by the terminal in the first cell. The terminal receives an indication of first cell configuration information from the network device, where the first cell configuration information is one of the r pieces of cell configuration information, and the first cell configuration information includes a first capability parameter of the first cell. A wireless communication capability that needs to be supported by the terminal in the first cell and that is indicated by the first capability parameter is determined as the wireless communication capability that needs to be supported by the terminal in the first cell.

According to the communication method provided in the first aspect, if the wireless communication capability that needs to be supported by the terminal in the first cell needs to be reconfigured, the network device may send an indication of new cell configuration information to the terminal, where the new cell configuration information is one of the r pieces of cell configuration information, and the new cell configuration information is different from the first cell configuration information. In this way, when reconfiguring the wireless communication capability that needs to be supported by the terminal in the first cell, the network device may not need to resend a new capability parameter. Configuration efficiency is higher. Therefore, a speed of adjusting the wireless communication capability that needs to be supported by the terminal in the first cell can be accelerated. Further, network resource utilization can be improved.

In a possible design, the terminal sends wireless communication capability information of the terminal to the network device, where the wireless communication capability information indicates at least one frequency band combination that is capable of being supported by the terminal and a wireless communication capability that is capable of being supported by the terminal in the at least one frequency band combination. According to this design, an example beneficial effect includes: The network device can obtain a wireless communication capability of the terminal, and configure, based on the wireless communication capability of the terminal, a wireless communication capability that needs to be supported by the terminal in at least one cell. In this way, a case in which the wireless communication capability that needs to be supported by the terminal in the at least one cell and that is configured by the network device exceeds the wireless communication capability of the terminal can be reduced or avoided.

In a possible design, that the terminal receives the r pieces of cell configuration information of the first cell from the network device includes: The terminal receives M pieces of cell configuration information from the network device, where M is a positive integer, the cell configuration information includes a capability parameter of a cell corresponding to the cell configuration information, and the r pieces of cell configuration information are r of the M pieces of cell configuration information. According to this design, an example beneficial effect includes: The terminal can obtain a plurality of pieces of cell configuration information of a plurality of cells, so that configuration efficiency of reconfiguring, by the network device, wireless communication capabilities that need to be supported by the terminal in the plurality of cells can be improved.

In a possible design, that the terminal receives the indication of the first cell configuration information from the network device includes: The terminal receives first indication information from the network device, where the first indication information indicates N of the M pieces of cell configuration information, N is a positive integer, the first cell configuration information is one of the N pieces of cell configuration information, and the first indication information includes the indication of the first cell configuration information. According to the foregoing design, an example beneficial effect includes: The network device can reconfigure, by using indication information of cell configuration information, the wireless communication capabilities that need to be supported by the terminal in the plurality of cells, so that the configuration efficiency of reconfiguring, by the network device, the wireless communication capabilities that need to be supported by the terminal in the plurality of cells can be improved.

In a possible design, the N pieces of cell configuration information respectively correspond to N cells, and the N pieces of cell configuration information respectively include capability parameters of the N cells; and that the wireless communication capability that needs to be supported by the terminal in the first cell and that is indicated by the first capability parameter is determined as the wireless communication capability that needs to be supported by the terminal in the first cell includes: determining, as wireless communication capabilities that respectively need to be supported by the terminal in the N cells, wireless communication capabilities that respectively need to be supported by the terminal in the N cells and that are indicated by the capability parameters of the N cells.

In a possible design, the N cells belong to at least one frequency band in a first frequency band combination that is capable of being supported by the terminal, and the N pieces of cell configuration information need to satisfy that a sum of the wireless communication capabilities that respectively need to be supported by the terminal in the N cells and that are indicated by the capability parameters of the N cells does not exceed a wireless communication capability that can be supported by the terminal in the first frequency band combination. According to this design, an example beneficial effect includes: when adjusting the wireless communication capability that needs to be supported by the terminal in the at least one cell, the network device only needs to ensure that a wireless communication capability that needs to be supported by the terminal in at least one cell in an activated state does not exceed the wireless communication capability of the terminal. In other words, only a capability parameter that needs to be supported by the terminal in the activated cell occupies or is calculated into the wireless communication capability of the terminal. In comparison with that the network device needs to ensure that a sum of the wireless communication capability that needs to be supported by the terminal in the at least one configured cell does not exceed the wireless communication capability of the terminal, this improves flexibility of adjusting the wireless communication capability that needs to be supported by the terminal in the at least one cell.

In a possible design, the first frequency band combination includes the frequency band to which the N cells belong and another frequency band.

In a possible design, the cell configuration information further includes status information, the status information indicates that a cell corresponding to the cell configuration information is in an activated state or a deactivated state, and in the N pieces of cell configuration information, there are P pieces of cell configuration information including status information indicating the activated state, where P is a positive integer. According to this design, an example beneficial effect includes: The network device can activate or deactivate a cell when indicating a capability parameter of the cell. In comparison with activating or deactivating the cell by using additional signaling, this design can efficiently ensure that a wireless communication capability that needs to be supported by the terminal in at least one cell in an activated state does not exceed the wireless communication capability of the terminal.

In a possible design, the P pieces of cell configuration information respectively correspond to P cells, and the P pieces of cell configuration information respectively include capability parameters of the P cells; and that the wireless communication capability that needs to be supported by the terminal in the first cell and that is indicated by the first capability parameter is determined as the wireless communication capability that needs to be supported by the terminal in the first cell includes: determining, as wireless communication capabilities that respectively need to be supported by the terminal in the P cells, wireless communication capabilities that respectively need to be supported by the terminal in the P cells and that are indicated by the capability parameters of the P cells.

In a possible design, the P cells belong to at least one frequency band in a first frequency band combination that is capable of being supported by the terminal, and the P pieces of cell configuration information need to satisfy that a sum of the wireless communication capabilities that respectively need to be supported by the terminal in the P cells and that are indicated by the capability parameters of the P cells does not exceed a wireless communication capability that is capable of being supported by the terminal in the first frequency band combination.

In a possible design, the first frequency band combination includes the frequency band to which the P cells belong and another frequency band.

In a possible design, that the terminal receives the r pieces of cell configuration information of the first cell from the network device includes: The terminal receives the r pieces of cell configuration information of the first cell from the network device in the first cell. According to this design, an example beneficial effect includes: The terminal can determine, based on a source of cell configuration information, a cell corresponding to the cell configuration information. In this way, the cell configuration information may not need to carry a cell identity, so that signaling overheads are reduced.

In a possible design, that the terminal receives the indication of the first cell configuration information from the network device includes: The terminal receives the indication of the first cell configuration information from the network device in the first cell. According to this design, an example beneficial effect includes: The network device only needs to ensure that an indication of cell configuration information is unique in a cell range corresponding to the cell configuration information. This simplifies a design of the indication of the cell configuration information.

According to a second aspect, a communication method is provided. The method may be applied to a network device or a chip in the network device. The following uses the network device as an example to describe the method. The method includes: The network device sends r pieces of cell configuration information of a first cell to a terminal, where r is a positive integer, each of the r pieces of cell configuration information includes a capability parameter of the first cell, and the capability parameter of the first cell indicates a wireless communication capability that needs to be supported by the terminal in the first cell. The network device sends an indication of first cell configuration information to the terminal, where the first cell configuration information is one of the r pieces of cell configuration information, and the first cell configuration information includes a first capability parameter of the first cell.

In a possible design, the network device receives wireless communication capability information from the terminal, where the wireless communication capability information indicates at least one frequency band combination that is capable of being supported by the terminal and a wireless communication capability that is capable of being supported by the terminal in the at least one frequency band combination.

In a possible design, that the network device sends the r pieces of cell configuration information of the first cell to the terminal includes: The network device sends M pieces of cell configuration information to the terminal, where M is a positive integer, the cell configuration information includes a capability parameter of a cell corresponding to the cell configuration information, and the r pieces of cell configuration information are r of the M pieces of cell configuration information.

In a possible design, that the network device sends the indication of the first cell configuration information to the terminal includes: The network device sends first indication information to the terminal, where the first indication information indicates N of the M pieces of cell configuration information, N is a positive integer, the first cell configuration information is one of the N pieces of cell configuration information, and the first indication information includes the indication of the first cell configuration information.

In a possible design, the N pieces of cell configuration information respectively correspond to N cells, the N pieces of cell configuration information respectively include capability parameters of the N cells, the N cells belong to at least one frequency band in a first frequency band combination that is capable of being supported by the terminal, and the N pieces of cell configuration information need to satisfy that a sum of wireless communication capabilities that respectively need to be supported by the terminal in the N cells and that are indicated by the capability parameters of the N cells does not exceed a wireless communication capability that can be supported by the terminal in the first frequency band combination.

In a possible design, the first frequency band combination includes the frequency band to which the N cells belong and another frequency band.

In a possible design, the cell configuration information further includes status information, the status information indicates that a cell corresponding to the cell configuration information is in an activated state or a deactivated state, and in the N pieces of cell configuration information, there are P pieces of cell configuration information including status information indicating the activated state, where P is a positive integer.

In a possible design, the P pieces of cell configuration information respectively correspond to P cells, the P pieces of cell configuration information respectively include capability parameters of the P cells, the P cells belong to at least one frequency band in a first frequency band combination that is capable of being supported by the terminal, and the P pieces of cell configuration information need to satisfy that a sum of wireless communication capabilities that respectively need to be supported by the terminal in the P cells and that are indicated by the capability parameters of the P cells does not exceed a wireless communication capability that is capable of being supported by the terminal in the first frequency band combination.

In a possible design, the first frequency band combination includes the frequency band to which the P cells belong and another frequency band.

In a possible design of the first aspect or the second aspect, the wireless communication capability includes at least one of the following: a quantity of physical downlink control channels that are capable of being simultaneously processed, a quantity of control-resource set pools that are capable of being simultaneously processed, a quantity of physical downlink shared channels that are capable of being simultaneously processed, a quantity of physical uplink shared channels that are capable of being simultaneously processed, a quantity of physical uplink control channels that are capable of being simultaneously processed, a quantity of layers that are capable of being simultaneously processed, a quantity of streams that are capable of being simultaneously processed, a quantity of antenna ports that are capable of being simultaneously processed, a quantity of channels that are capable of being simultaneously processed, whether a single downlink control information based multiple transmission reception point feature is supported, or whether a multiple downlink control information based multiple transmission reception point feature is supported.

In a possible design of the first aspect or the second aspect, the terminal sends wireless communication capability information of the terminal to the network device, where the wireless communication capability information indicates at least one frequency band combination that is capable of being supported by the terminal and a wireless communication capability that is capable of being supported by the terminal on at least one carrier in each frequency band in the at least one frequency band combination.

In a possible design of the first aspect or the second aspect, the terminal sends wireless communication capability information of the terminal to the network device, where the wireless communication capability information indicates at least one frequency band combination that is capable of being supported by the terminal and a wireless communication capability that is capable of being supported by the terminal in each frequency band in the at least one frequency band combination.

In a possible design of the first aspect or the second aspect, the terminal sends wireless communication capability information of the terminal to the network device, where the wireless communication capability information indicates at least one frequency band combination that is capable of being supported by the terminal and a wireless communication capability that is capable of being supported by the terminal.

In a possible design of the first aspect or the second aspect, the wireless communication capability information of the terminal may further indicate a maximum quantity of cells that may be simultaneously configured for the terminal and/or a maximum quantity of cells that may be simultaneously activated for the terminal.

In a possible design of the first aspect or the second aspect, the N pieces of cell configuration information respectively correspond to N cells, the N pieces of cell configuration information respectively include capability parameters of the N cells, the N cells belong to at least one frequency band in a first frequency band combination that is capable of being supported by the terminal, and capability configuration information of the N cells needs to satisfy that a wireless communication capability that needs to be supported by the terminal in any one of the N cells and that is indicated by a capability parameter of the any cell does not exceed a wireless communication capability that can be supported by the terminal on a carrier corresponding to the any cell in the first frequency band combination.

In a possible design of the first aspect or the second aspect, the N pieces of cell configuration information respectively correspond to N cells, the N pieces of cell configuration information respectively include capability parameters of the N cells, the N cells belong to at least one frequency band in a first frequency band combination that is capable of being supported by the terminal, and capability configuration information of the N cells needs to satisfy that a wireless communication capability that needs to be supported by the terminal in any one of the N cells and that is indicated by a capability parameter of the any cell does not exceed a wireless communication capability that can be supported by the terminal in a frequency band to which the any cell belongs in the first frequency band combination.

In a possible design of the first aspect or the second aspect, the N pieces of cell configuration information respectively correspond to N cells, the N pieces of cell configuration information respectively include capability parameters of the N cells, the N cells belong to at least one frequency band in a first frequency band combination that is capable of being supported by the terminal, and capability configuration information of the N cells needs to satisfy that a sum of wireless communication capabilities that respectively need to be supported by the terminal in the N cells and that are indicated by the capability parameters of the N cells does not exceed a wireless communication capability that can be supported by the terminal.

In a possible design of the first aspect or the second aspect, the P pieces of cell configuration information respectively correspond to P cells, the P pieces of cell configuration information respectively include capability parameters of the P cells, the P cells belong to at least one frequency band in a first frequency band combination that is capable of being supported by the terminal, and capability configuration information of the P cells needs to satisfy that a wireless communication capability that needs to be supported by the terminal in the any one of the P cells and that is indicated by a capability parameter of the any cell does not exceed a wireless communication capability that is capable of being supported by the terminal on a carrier corresponding to the any cell in the first frequency band combination.

In a possible design of the first aspect or the second aspect, the P pieces of cell configuration information respectively correspond to P cells, the P pieces of cell configuration information respectively include capability parameters of the P cells, the P cells belong to at least one frequency band in a first frequency band combination that is capable of being supported by the terminal, and capability configuration information of the P cells needs to satisfy that a wireless communication capability that needs to be supported by the terminal in the any one of the P cells and that is indicated by a capability parameter of the any cell does not exceed a wireless communication capability that is capable of being supported by the terminal in a frequency band to which the any cell belongs in the first frequency band combination.

In a possible design of the first aspect or the second aspect, the M pieces of cell configuration information respectively correspond to x cells, x is a positive integer, and the x cells belong to at least one frequency band in a third frequency band combination that is capable of being supported by the terminal; and a sum of wireless communication capabilities that need to be supported by the terminal in the x cells and that are indicated by largest capability parameters of the x cells exceeds a wireless communication capability that can be supported by the terminal in the third frequency band combination, and a largest capability parameter of each of the x cells is a largest capability parameter in at least one capability parameter of the cell included in at least one piece of cell configuration information corresponding to the cell.

In a possible design of the first aspect or the second aspect, the M pieces of cell configuration information respectively correspond to the x cells, and x is a positive integer; and when the x cells are located in one frequency band in the third frequency band combination, the sum of the wireless communication capabilities that need to be supported by the terminal in the x cells and that are indicated by the largest capability parameters of the x cells may exceed a wireless communication capability that is capable of being supported by the terminal in the frequency band.

In a possible design of the first aspect or the second aspect, the M pieces of cell configuration information respectively correspond to the x cells, and x is a positive integer; and when the x cells are located in different frequency bands in the third frequency band combination, for T cells that are in the x cells and that belong to a first frequency band in the third frequency band combination, where T is a positive integer, a sum of wireless communication capabilities that need to be supported by the terminal in the T cells and that are indicated by largest capability parameters of the T cells may exceed a wireless communication capability that is capable of being supported by the terminal in the first frequency band.

In a possible design of the first aspect or the second aspect, the M pieces of cell configuration information respectively correspond to the x cells, and x is a positive integer; and the sum of the wireless communication capabilities that need to be supported by the terminal in the x cells and that are indicated by the largest capability parameters of the x cells may exceed the wireless communication capability that can be supported by the terminal.

In a possible design of the first aspect or the second aspect, that the network device sends the r pieces of cell configuration information of the first cell to the terminal includes: The network device sends the r pieces of cell configuration information of the first cell to the terminal in the first cell.

In a possible design of the first aspect or the second aspect, that the network device sends the indication of the first cell configuration information to the terminal includes: The network device sends the indication of the first cell configuration information to the terminal in the first cell.

In a possible design of the first aspect or the second aspect, r capability parameters of the first cells included in the r pieces of cell configuration information have a same category but different values.

In a possible design of the first aspect or the second aspect, the r pieces of cell configuration information of the first cell are carried in a radio resource control (radio resource control, RRC) message, and the indication of the first cell configuration information is carried in a medium access control (medium access control, MAC) control element (control element, CE) or downlink control information (downlink control information, DCI). According to this design, an example beneficial effect includes: Because a MAC CE exchanging speed or a DCI exchanging speed is faster than an RRC exchanging speed between the network device and the terminal, that the network device indicates the cell configuration information by using a MAC CE or DCI can accelerate a speed of subsequently adjusting the wireless communication capability that needs to be supported by the terminal in the first cell.

In a possible design of the first aspect or the second aspect, the indication of the first cell configuration information includes a configuration index of the first cell configuration information.

In a possible design of the first aspect or the second aspect, the indication of the first cell configuration information indicates a TCI state associated with the first cell configuration information. According to this design, an example beneficial effect includes: When the TCI state is indicated, cell configuration information associated with the TCI state may be indicated. This improves efficiency of subsequently adjusting the wireless communication capability that needs to be supported by the terminal in the first cell.

In a possible design of the first aspect or the second aspect, the first indication information includes configuration indexes of the N pieces of cell configuration information.

In a possible design of the first aspect or the second aspect, the first indication information indicates TCI states associated with the N pieces of cell configuration information.

In a possible design of the first aspect or the second aspect, the first indication information is carried in one or more messages.

According to a third aspect, this application provides a communication apparatus. The apparatus includes a module configured to perform the methods in the first aspect and the second aspect and any method in any design thereof.

According to a fourth aspect, this application provides a communication apparatus, including a processor and a memory. The processor is coupled to the memory. The memory stores program code. The processor executes the program code, so that the communication apparatus performs the methods in the first aspect and the second aspect and any method in any design thereof.

According to a fifth aspect, this application provides a communication apparatus, including at least one processor and an interface. The interface is configured to: receive a signal from a communication apparatus other than the communication apparatus and transmit the signal to the processor, or send a signal from the processor to a communication apparatus other than the communication apparatus. The processor implements the methods in the first aspect and the second aspect and any method in any design thereof by using a logic circuit or code instructions.

In a possible design, the apparatus may be a chip or an integrated circuit in the terminal or the network device in the methods in the first aspect and the second aspect and any method in any design thereof.

Optionally, the communication apparatus may further include at least one memory, and the memory stores the code instructions.

According to a sixth aspect, this application provides a communication apparatus. The apparatus has functions or operations for implementing any one of the methods in the first aspect and the second aspect and the method in any design thereof. The functions or the operations may be implemented by using hardware, or may be implemented by hardware executing corresponding software. The hardware or the software includes one or more units (modules) corresponding to the foregoing functions or operations, for example, a transceiver unit and a processing unit.

According to a seventh aspect, this application provides a computer-readable storage medium. The computer-readable storage medium stores computer program instructions. When the computer program instructions are executed by a processor, the methods in the first aspect and the second aspect and any method in any design thereof are implemented.

According to an eighth aspect, this application provides a computer program product. The computer program product includes program instructions. When the program instructions are executed by a processor, the methods in the first aspect and the second aspect and any method in any design thereof are implemented.

According to a ninth aspect, this application further provides a chip. The chip is configured to implement the methods in the first aspect and the second aspect and any method in any design thereof.

According to a tenth aspect, this application provides a communication system. The communication system includes a terminal configured to perform any method in the first aspect and any design thereof and a network device configured to perform any method in the second aspect and any design thereof.

### BRIEF DESCRIPTION OF DRAWINGS

With reference to the accompanying drawings, the following describes in detail the solutions provided in this application. Features or content denoted by dashed lines in the accompanying drawings may be understood as optional operations or optional structures in embodiments of this application.
FIG. 1 is a diagram of a communication scenario according to an embodiment of this application;
FIG. 2 is a schematic flowchart of a method according to an embodiment of this application;
FIG. 3 is a schematic flowchart of a method according to an embodiment of this application;
FIG. 4 is a schematic flowchart of a method according to an embodiment of this application;
FIG. 5 is a schematic flowchart of a method according to an embodiment of this application;
FIG. 6 is a schematic flowchart of a method according to an embodiment of this application;
FIG. 7 is a schematic flowchart of a method according to an embodiment of this application;
FIG. 8 is a schematic block diagram of a communication apparatus according to an embodiment of this application;
FIG. 9 is a schematic block diagram of a communication apparatus according to an embodiment of this application; and
FIG. 10 is a schematic block diagram of an apparatus according to an embodiment of this application.

### DESCRIPTION OF EMBODIMENTS

To make the specific technical solutions and inventive objectives of the present invention clearer, the following provides further descriptions with reference to specific implementations and accompanying drawings.

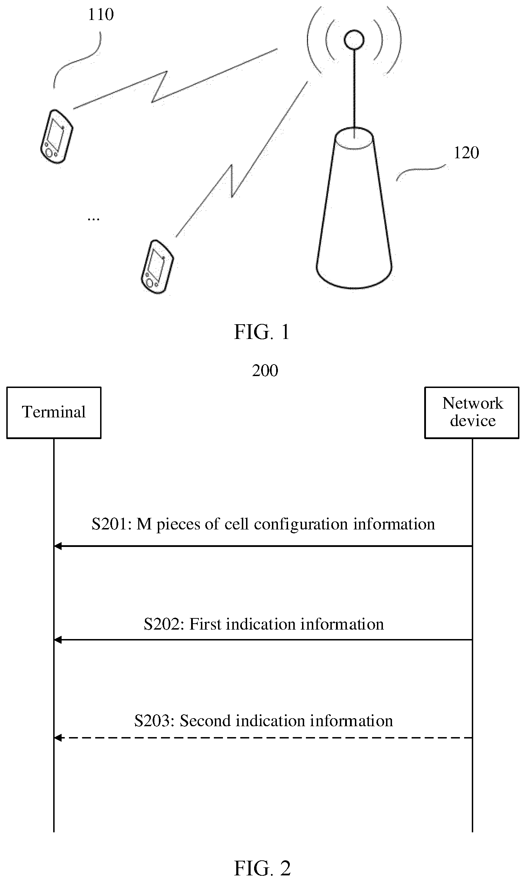

FIG. 1 is a diagram of a communication scenario according to an embodiment of this application. As shown in FIG. 1, a terminal 110 accesses a wireless network by using a network device 120. The terminal 110 may obtain a service of an external network (for example, the Internet) through wireless network, or communicate with another terminal through the wireless network. The terminal 110 accesses the network device 120.

In this application, the terminal 110 is also sometimes referred to as user equipment (user equipment, UE), a mobile station, a terminal device, or the like. The terminal may be widely used in various scenarios, for example, device-to-device (device-to-device, D2D), vehicle to everything (vehicle to everything, V2X) communication, machine type communication (machine type communication, MTC), an internet of things (internet of things, IoT), virtual reality, augmented reality, industrial control, self-driving, telemedicine, a smart grid, smart furniture, smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. The terminal may include but is not limited to user equipment UE, a mobile station, a mobile device, a terminal device, a user agent, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device (for example, a smart watch, a smart band, or smart glasses), smart furniture or a home appliance, a vehicle device in vehicle to everything (vehicle to everything, V2X), a terminal device having a relay function, customer premises equipment (customer premises equipment, CPE), an integrated access and backhaul (integrated access and backhaul, IAB) node (which is specifically a mobile terminal (mobile terminal, MT) of the IAB node or an IAB node serving as a terminal), and the like. A specific name and an implementation form of the terminal are not limited in this application.

In this application, the network device 120 may include but is not limited to a next generation NodeB (generation NodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB or home NodeB), a transmission point (transmission and reception point or transmission point), a road side unit (road side unit, RSU) having a base station function, a baseband unit (baseband unit, BBU), a remote radio unit (Remote Radio Unit, RRU), an active antenna unit (active antenna unit, AAU), one antenna panel or a group of antenna panels, a node having a base station function in a subsequent evolved system, or the like. The network device may be an entity, and may further include a central unit (central unit, CU) entity and at least one distributed unit (distributed unit, DU) entity. An interface between the CU and the DU may be referred to as an F1 interface. Two ends of the F1 interface are respectively the CU and the DU. A peer end of the F1 interface of the CU is the DU, and a peer end of the F1 interface of the DU is the CU. The F1 interface may further include an F1 interface control plane (F1-C) and an F1 interface user plane (F1-U).

The terminal 110 may send wireless communication capability information of the terminal to the network device 120. The wireless communication capability information of the terminal may indicate at least one of the following: (I) at least one frequency band combination that can be supported by the terminal and a wireless communication capability that can be supported by the terminal on at least one carrier in each frequency band in the at least one frequency band combination, where an example in which a quantity of PDSCHs that can be simultaneously processed is the wireless communication capability of the terminal is used, and the wireless communication capability information of the terminal may be represented as: {carrier 1 in a band A: two PDSCHs; carrier 2 in the band A: two PDSCHs}, and {carrier 1 in the band A: one PDSCH; carrier 2 in the band A: one PDSCH; carrier 1 in a band B: one PDSCH; carrier 2 in the band B: one PDSCH}; (II) at least one frequency band combination that can be supported by the terminal and a wireless communication capability that can be supported by the terminal in each frequency band in the at least one frequency band combination, where for example, the wireless communication capability information of the terminal may be represented as {band A: four PDSCHs} and {band A: two PDSCHs; band B: two PDSCHs}; (III) at least one frequency band combination that can be supported by the terminal and a wireless communication capability that can be supported by the terminal in the at least one frequency band combination, where for example, the wireless communication capability information of the terminal may be represented as {band A: five PDSCHs} and {band A, band B: four PDSCHs}; or (IV) at least one frequency band combination that can be supported by the terminal and a wireless communication capability that can be supported by the terminal, where for example, the wireless communication capability information of the terminal may be represented as {band A}, {band A, band B}, and {four PDSCHs}.

One frequency band may include at least one carrier (carrier). The carrier may include an uplink (uplink, UL) carrier or a downlink (downlink, DL) carrier. The uplink carrier is used by the terminal to send a signal to the network device, and the downlink carrier is used by the network device to send a signal to the terminal. The uplink carrier and the downlink carrier may belong to different frequency resources (for example, implemented by using a frequency division multiplexing technology), or may belong to a same frequency resource (for example, implemented by using a non-frequency division multiplexing technology like space division multiplexing or time division multiplexing). A wireless communication capability of the terminal on the uplink carrier and a wireless communication capability of the terminal on the downlink carrier may be separately configured. In another implementation, the carrier includes an uplink carrier and a downlink carrier. A wireless communication capability of the terminal on the uplink carrier and a wireless communication capability of the terminal on the downlink carrier may be configured together. In this application, "the uplink carrier and/or the downlink carrier" are collectively referred to as a "carrier", and that the "carrier" is the uplink carrier and/or the downlink carrier may be determined with reference to a specific context.

In this application, a wireless communication capability may include an uplink wireless communication capability (for example, a PUSCH quantity, a PUCCH quantity, an uplink layer quantity, an uplink stream quantity, an uplink antenna port (antenna port) quantity, a transmit channel quantity, and whether an uplink s-DCI m-TRP feature or an uplink m-DCI m-TRP feature is supported) and a downlink wireless communication capability (for example, a PDSCH quantity, a CORESET pool quantity, a downlink layer quantity, a downlink stream quantity, a downlink antenna port quantity, a receive channel quantity, and whether a downlink s-DCI m-TRP feature or a downlink m-DCI m-TRP feature is supported).

The uplink wireless communication capability and the downlink wireless communication capability may be coupled. In this way, for the cases (I) to (IV) of the wireless communication capability information of the terminal, the "wireless communication capability that can be supported" may be a "sum of an uplink wireless communication capability and a downlink wireless communication capability that can be supported". The uplink wireless communication capability and the downlink wireless communication capability may alternatively be decoupled. In this way, for the cases (I) to (IV) of the wireless communication capability information of the terminal, the "wireless communication capability that can be supported" may be an "uplink wireless communication capability that can be supported" and/or a "downlink wireless communication capability that can be supported".

In this application, "can support" may be understood as "support at most" or "support a maximum of". The wireless communication capability may include at least one of the following: a quantity of physical downlink control channels (physical downlink control channels, PDCCHs) that can be simultaneously processed, a quantity of control-resource set pools (control-resource set pools, CORESET pools) that can be simultaneously processed, a quantity of physical downlink shared channels (physical downlink shared channels, PDSCHs) that can be simultaneously processed, a quantity of physical uplink shared channels (physical uplink shared channels, PUSCHs) that can be simultaneously processed, a quantity of physical uplink control channels (physical uplink control channels, PUCCHs) that can be simultaneously processed, a quantity of layers that can be simultaneously processed, a quantity of streams that can be simultaneously processed, a quantity of antenna ports (antenna ports) that can be simultaneously processed, a quantity of channels that can be simultaneously processed, whether a single downlink control information (downlink control information, DCI) based multiple transmission reception point (single DCI based multiple TRP, s-DCI m-TRP) feature is supported, whether a multiple DCI based multiple transmission reception point (multiple DCI based multiple TRP, m-DCI m-TRP) feature is supported, or the like. In this application, "processing" may include receiving, detecting, monitoring, sending, or using. "Simultaneously" may be understood as being in a same time unit, and the time unit may be, for example, a sampling point, a symbol, a mini-slot, a slot, a subframe, or a radio frame.

The "quantity of PDCCHs that can be simultaneously processed" may be associated with the "quantity of PDSCHs that can be simultaneously processed" or the "quantity of PUSCHs that can be simultaneously processed". For example, when the network device schedules signal transmission on a PDSCH on a carrier by using downlink control information (downlink control information, DCI) on a PDCCH on a same carrier of the network device, the "quantity of PDCCHs that can be simultaneously processed" may be equal to the "quantity of PDSCHs that can be simultaneously processed". In this way, the terminal only needs to send one of the "quantity of PDCCHs that can be simultaneously processed", the "quantity of PDSCHs that can be simultaneously processed", and the "quantity of PUSCHs that can be simultaneously processed" to the network device, so that the network device can obtain the other two quantities. For another example, when the network device may schedule, by using DCI on a PDCCH on a carrier of the network device, signal transmission on a PDSCH or a PUSCH on another carrier of the network device (for example, transmission of one piece of DCI is performed on a PDCCH on a carrier of the network device, and the DCI may be for scheduling a plurality of PDSCHs or PUSCHs that are for signal transmission and that are on a plurality of carriers of the network device), the "quantity of PDCCHs that can be simultaneously processed" and the "quantity of PDSCHs that can be simultaneously processed" or the "quantity of PUSCHs that can be processed simultaneously" may be unequal.

The "quantity of PDCCHs that can be processed simultaneously" may be associated with the "quantity of CORESET pools that can be processed simultaneously". At least one control-resource set (control-resource set, CORESET) may be configured for the terminal in a case of one network device, and the terminal may monitor a PDCCH in the at least one CORESET, to obtain DCI on the PDCCH. One CORESET pool may include the at least one CORESET. Different CORESET pools may have different CORESET pool indexes (indexes). If one CORESET pool can carry only one PDCCH, the "quantity of PDCCHs that can be simultaneously processed" is equal to the "quantity of CORESET pools that can be simultaneously processed". In this way, the terminal may only need to send the "quantity of PDCCHs that can be simultaneously processed" to the network device, and the network device may obtain the "quantity of CORESET pools that can be simultaneously processed".

"Whether the s-DCI m-TRP feature is supported" may be associated with "whether the m-DCI m-TRP feature is supported". In a multiple-transmission/reception point (multiple-transmission/reception point, m-TRP) technology, one CORESET pool may be configured for the terminal in a case of each transmission reception point (transmission reception point, TRP) (the TRP may be considered as a network device), to carry a PDCCH sent by the TRP to the terminal. DCI carried in the PDCCH sent by the TRP is for scheduling signal transmission on a PDSCH or a PUSCH between the TRP and the terminal. The feature can be referred to as multiple DCI based multiple TRP (multiple DCI based multiple TRP, m-DCI m-TRP). Correspondingly, if the DCI carried on the PDCCH sent by the TRP may be for scheduling the signal transmission on the PDSCH or the PUSCH between the TRP and the terminal, and may also be for simultaneously scheduling signal transmission on a PDSCH or a PUSCH between another TRP and the terminal, the feature may be referred to as a single DCI based multiple TRP (single DCI based multiple TRP, s-DCI m-TRP) feature. In some possible scenarios, when the terminal supports the m-TRP technology, that the terminal "does not support the m-DCI m-TRP feature" may be understood as the terminal "supports the s-DCI m-TRP feature". For definitions of the m-DCI m-TRP and the s-DCI m-TRP, refer to the 3rd generation partnership project (3rd generation partnership project, 3GPP) standard protocol TS38.822 and/or protocol TS38.213 (for example, version v16.3.0). In this way, the terminal may only need to send "whether the s-DCI m-TRP feature is supported" to the network device, and the network device may obtain "whether the m-DCI m-TRP feature is supported".

The "quantity of PDCCHs that can be simultaneously processed" and the "quantity of PUCCHs that can be simultaneously processed" may be associated with "whether the m-DCI m-TRP feature is supported". For example, if M PDCCHs or M PUCCHs need to be supported and a maximum of M PDCCHs or M PUCCHs are simultaneously supported between the terminal and one TRP in a frequency band, and only two TRPs serve the m-DCI m-TRP feature, that the terminal does not support the m-DCI m-TRP feature in the frequency band indicates that a quantity of PDCCHs or PUCCHs that can be simultaneously supported by the terminal in the frequency band is M, and that the terminal supports the m-DCI m-TRP feature in the frequency band indicates that a quantity of PDCCHs or PUCCHs that can be simultaneously supported by the terminal in the frequency band is 2M. M is a positive integer. In this way, the terminal may only need to send at least one of the "quantity of PDCCHs that can be simultaneously processed" and the "quantity of PUCCHs that can be simultaneously processed" to the network device, so that the network device can obtain "whether the m-DCI m-TRP feature is supported".

The "quantity of PDSCHs that can be simultaneously processed" and the "quantity of PUSCHs that can be simultaneously processed" may be associated with "whether the s-DCI m-TRP feature is supported" or "whether the m-DCI m-TRP feature is supported". For example, if M PDSCHs or M PUSCHs need to be supported and a maximum of M PDSCHs or M PUSCHs are simultaneously supported between the terminal and one TRP in a frequency band, and only two TRPs serve the s-DCI m-TRP or m-DCI m-TRP feature, that the terminal does not support the s-DCI m-TRP or m-DCI m-TRP feature in the frequency band indicates that a quantity of PDSCHs or PUSCHs that can be simultaneously supported by the terminal in the frequency band is M, and that the terminal supports the s-DCI m-TRP or m-DCI m-TRP feature in the frequency band indicates that a quantity of PDSCHs or PUSCHs that can be simultaneously supported by the terminal in the frequency band is 2M. M is a positive integer. In this application, one of manners of adjusting the two wireless communication capabilities: the "quantity of PDSCHs that can be simultaneously processed" and the "quantity of PUSCHs that can be simultaneously processed" is adjusting the two wireless communication capabilities: "whether the s-DCI m-TRP feature is supported" and "whether the m-DCI m-TRP feature is supported". Adjustment of the two wireless communication capabilities: "whether the s-DCI m-TRP feature is supported" and "whether the m-DCI m-TRP feature is supported" may include adjustment of "supported" and "not supported", or may include adjustment of a quantity of pieces of used DCI or a quantity of used TRPs. In this way, the terminal may only need to send at least one of the "quantity of PDSCHs that can be simultaneously processed" and the "quantity of PUSCHs that can be simultaneously processed" to the network device, so that the network device can obtain "whether the s-DCI m-TRP feature is supported" or "whether the m-DCI m-TRP feature is supported".

The "quantity of layers that can be simultaneously processed" may be equal to the "quantity of streams that can be simultaneously processed". APDSCH or a PUSCH on each carrier may carry a multi-stream or multi-layer (layer) signal, or a multi-antenna port (which may also be referred to as a multi-port) signal. A quantity of streams, layers, or antenna ports that can be carried on each PDSCH or PUSCH depends on limitations of parameters such as channel quality of a carrier, a quantity of antennas of the network device, and a quantity of antennas of the terminal. For the stream, the layer, and the antenna port, refer to definitions in a multiple-input multiple-output (multiple-input multiple-output, MIMO) system.

The "quantity of channels that can be simultaneously processed" may be a quantity of transmit (TX) channels that can be simultaneously processed and/or a quantity of receive (RX) channels that can be simultaneously processed. The quantity of transmit channels that can be simultaneously processed may be associated with the "quantity of PUSCHs that can be simultaneously processed" and the "quantity of layers that can be simultaneously processed" or the "quantity of streams that can be simultaneously processed". For example, the quantity of transmit channels that can be simultaneously processed may be equal to a product of the "quantity of PUSCHs that can be simultaneously processed" and the "quantity of layers that can be simultaneously processed", or the quantity of transmit channels that can be simultaneously processed may be equal to a product of the "quantity of PUSCHs that can be simultaneously processed" and the "quantity of streams that can be simultaneously processed". The quantity of receive channels that can be simultaneously processed may be associated with the "quantity of PDSCHs that can be simultaneously processed" and the "quantity of layers that can be simultaneously processed" or the "quantity of streams that can be simultaneously processed". For example, the quantity of receive channels that can be simultaneously processed may be equal to a product of the "quantity of PDSCHs that can be simultaneously processed" and the "quantity of layers that can be simultaneously processed", or the quantity of transmit channels that can be simultaneously processed may be equal to a product of the "quantity of PDSCHs that can be simultaneously processed" and the "quantity of streams that can be simultaneously processed". In this way, the terminal may only need to send the "quantity of PUSCHs that can be simultaneously processed" and the "quantity of layers that can be simultaneously processed" or the "quantity of streams that can be simultaneously processed" to the network device, so that the network device can obtain the "quantity of channels that can be simultaneously processed."

An example in which the quantity of PDSCHs that can be simultaneously processed is the wireless communication capability of the terminal is used (for another wireless communication capability, for example, the quantity of layers or CORESET pools that can be simultaneously processed, reference may be made for understanding, and details are not described again). The wireless communication capability information of the terminal may be represented as: {band A: two PDSCHs} and {band A: one PDSCH; band B: one PDSCH}. A meaning of the wireless communication capability information of the terminal may be understood as that the terminal supports two frequency band combinations: a frequency band combination 1: {band A} and a frequency band combination 2: {band A, band B}. In the frequency band combination 1, a quantity of PDSCHs that can be simultaneously processed by the terminal in the band A is two. In the frequency band combination 2, a quantity of PDSCHs that can be simultaneously processed by the terminal in the band A is one, and a quantity of PDSCHs that can be simultaneously processed by the terminal in the band B is one. In this application, the band A and the band B are merely intended to indicate different frequency bands, but are not intended to limit specific values of the frequency bands.

The signal in this application may include signaling, a reference signal, or service data. The signaling may include a radio resource control (radio resource control, RRC) message, a broadcast message, a system message, or a medium access control (medium access control, MAC) control element (control element, CE). The broadcast message may include remaining minimum system information (remaining minimum system information, RMSI). The signaling may also include physical layer signaling or dynamic signaling. The physical layer signaling or the dynamic signaling may include signaling carried in a physical control channel or signaling carried in a physical data channel, for example, DCI or uplink control information (uplink control information, UCI). The physical data channel may be a downlink channel, for example, a PDSCH. The physical data channel may alternatively be an uplink channel, for example, a PUSCH. The physical control channel may be a downlink channel, for example, a PDCCH, an enhanced physical downlink control channel (enhanced physical downlink control channel, ePDCCH), a narrowband physical downlink control channel (narrowband physical downlink control channel, NPDCCH), or a machine type communication physical downlink control channel (machine type communication physical downlink control channel, MPDCCH). The physical control channel may alternatively be an uplink channel, for example, a PUCCH. The DCI may be carried in the physical downlink control channel. The UCI may be carried in the physical uplink control channel. The reference signal may include a channel state information reference signal (channel state information reference signal, CSI-RS), a demodulation reference signal (demodulation reference signal, DMRS), a synchronization signal and a physical broadcast channel block (synchronization signal and physical broadcast channel block, SSB), a sounding reference signal (sounding reference signal, SRS), a tracking reference signal (tracking reference signal, TRS), or the like. Optionally, it may alternatively be considered that an SSB does not belong to the reference signal.

The network device 120 may configure at least one cell for the terminal 110. The at least one cell may belong to at least one frequency band in a first frequency band combination that can be supported by the terminal. The first frequency band combination may include only the at least one frequency band to which the at least one cell belongs. Alternatively, the first frequency band combination may include not only the at least one frequency band to which the at least one cell belongs, but also another frequency band. A process in which the network device configures the at least one cell for the terminal includes: The network device configures a wireless communication capability that needs to be supported by the terminal in the at least one cell.

There is a correspondence between a carrier and a cell. One cell may include only at least one downlink carrier. In this case, a carrier corresponding to the cell is the at least one downlink carrier. One cell may alternatively include at least one downlink carrier and at least one uplink carrier. In this case, carriers corresponding to the cell are the at least one downlink carrier and the at least one uplink carrier. The cell corresponds to the at least one downlink carrier, and the cell may correspond to the at least one uplink carrier. A wireless communication capability that needs to be supported by the terminal in the cell may be understood as a wireless communication capability that needs to be supported by the terminal on a carrier corresponding to the cell. The wireless communication capability that needs to be supported by the terminal in the cell may be considered as a wireless communication capability that is of the terminal and that needs to be occupied by the cell, namely, a wireless communication capability that is of the terminal and that cannot be used by another cell.

For the cases (I) to (IV) of the wireless communication capability information of the terminal in the embodiment corresponding to FIG. 1, the wireless communication capability that needs to be supported by the terminal in the at least one cell respectively needs to satisfy the following: (I) A wireless communication capability that needs to be supported by the terminal in any one of the at least one cell does not exceed a wireless communication capability that can be supported by the terminal on a carrier corresponding to the any cell in the first frequency band combination; (II) the wireless communication capability that needs to be supported by the terminal in the any one of the at least one cell does not exceed a wireless communication capability that can be supported by the terminal in a frequency band to which the any cell belongs in the first frequency band combination; (III) a sum of the wireless communication capability that needs to be supported by the terminal in the at least one cell does not exceed a wireless communication capability that can be supported by the terminal in the first frequency band combination; and (IV) the sum of the wireless communication capability that needs to be supported by the terminal in the at least one cell does not exceed the wireless communication capability that can be supported by the terminal.

In the case (II) that needs to be satisfied by the wireless communication capability that needs to be supported by the terminal in the at least one cell, for T (T is a positive integer) cells that are in the at least one cell and that belong to a same frequency band in the first frequency band combination, wireless communication capabilities that need to be supported by the terminal in the T cells need to satisfy that a sum of the wireless communication capabilities that need to be supported by the terminal in the T cells does not exceed a wireless communication capability that can be supported by the terminal in the frequency band to which the T cells belong in the first frequency band combination. Optionally, for the T cells, whether a wireless communication capability that needs to be supported by the terminal in any one of the T cells exceeds a wireless communication capability that can be supported by the terminal in the frequency band to which the any cell belongs in the first frequency band combination may not need to be considered.

It is assumed that the network device configures P cells for the terminal, where P is a positive integer. In this case, T is a positive integer less than or equal to P. When T is equal to P, it may be understood as that the P cells belong to a same frequency band in the first frequency band combination that can be supported by the terminal. When T is equal to 1, it may be understood as that the P cells respectively belong to different frequency bands in the first frequency band combination that can be supported by the terminal.

(I) to (IV) that respectively need to be satisfied by the wireless communication capability that needs to be supported by the terminal in the at least one cell may be understood as a configuration constraint that needs to be followed when the network device configures the wireless communication capability that needs to be supported by the terminal in the at least one cell.

When the uplink wireless communication capability and the downlink wireless communication capability are coupled, (I) to (IV) that respectively need to be satisfied by the wireless communication capability that needs to be supported by the terminal in the at least one cell may be replaced with the following: (I) A sum of an uplink wireless communication capability and a downlink wireless communication capability that need to be supported by the terminal in the any one of the at least one cell does not exceed the wireless communication capability that can be supported by the terminal on the carrier corresponding to the any cell in the first frequency band combination; (II) the sum of the uplink wireless communication capability and the downlink wireless communication capability that need to be supported by the terminal in the any one of the at least one cell does not exceed the wireless communication capability that can be supported by the terminal in the frequency band to which the any cell belongs in the first frequency band combination; (III) a sum of an uplink wireless communication capability and a downlink wireless communication capability that need to be supported by the terminal in the at least one cell does not exceed the wireless communication capability that can be supported by the terminal in the first frequency band combination; and (IV) the sum of the uplink wireless communication capability and the downlink wireless communication capability that need to be supported by the terminal in the at least one cell does not exceed the wireless communication capability that can be supported by the terminal.

When the uplink wireless communication capability and the downlink wireless communication capability are decoupled, (I) to (IV) that respectively need to be satisfied by the wireless communication capability that needs to be supported by the terminal in the at least one cell may be replaced with the following: (I) An uplink wireless communication capability that needs to be supported by the terminal in the any one of the at least one cell does not exceed an uplink wireless communication capability that can be supported by the terminal on the carrier corresponding to the any cell in the first frequency band combination, and a downlink wireless communication capability that needs to be supported by the terminal in the any one of the at least one cell does not exceed a downlink wireless communication capability that can be supported by the terminal on the carrier corresponding to the any cell in the first frequency band combination; (II) the uplink wireless communication capability that needs to be supported by the terminal in the any one of the at least one cell does not exceed an uplink wireless communication capability that can be supported by the terminal in the frequency band to which the any cell belongs in the first frequency band combination, and the downlink wireless communication capability that needs to be supported by the terminal in the any one of the at least one cell does not exceed a downlink wireless communication capability that can be supported by the terminal in the frequency band to which the any cell belongs in the first frequency band combination; (III) a sum of an uplink wireless communication capability that needs to be supported by the terminal in the at least one cell does not exceed an uplink wireless communication capability that can be supported by the terminal in the first frequency band combination, and a sum of a downlink wireless communication capability that need to be supported by the terminal in the at least one cell does not exceed a downlink wireless communication capability that can be supported by the terminal in the first frequency band combination; and (IV) the uplink wireless communication capability that needs to be supported by the terminal in the at least one cell does not exceed the uplink wireless communication capability that can be supported by the terminal, and the downlink wireless communication capability that needs to be supported by the terminal in the at least one cell does not exceed the downlink wireless communication capability that can be supported by the terminal.

The example in which the quantity of PDSCHs that can be simultaneously processed is the wireless communication capability of the terminal is still used. If the wireless communication capability information of the terminal may be represented as: {band A: two PDSCHs} and {band A: one PDSCH; band B: one PDSCH}, the network device may configure at least one cell for the terminal in only the band A, and a quantity of PDSCHs that need to be capable of being simultaneously processed by the terminal in the at least one cell does not exceed two (in this case, the first frequency band combination is {band A}); the network device may configure at least one cell for the terminal in only the band B, and a quantity of PDSCHs that need to be capable of being simultaneously processed by the terminal in the at least one cell does not exceed one (in this case, the first frequency band combination is {band A, band B}); or the network device may configure at least one cell for the terminal in the band A, and configure at least one cell for the terminal in the band B, a quantity of PDSCHs that need to be capable of being simultaneously processed by the terminal in the at least one cell that belongs to the band A does not exceed one, and a quantity of PDSCHs that need to be capable of being simultaneously processed by the terminal in the at least one cell that belongs to the band B does not exceed one (in this case, the first frequency band combination is still {band A, band B}).

Optionally, the network device 120 may reconfigure at least one new cell for the terminal 110. For example, the at least one cell configured by the network device for the terminal may correspond to at least one carrier. Because channel quality on a specific carrier in the at least one carrier deteriorates, a communication condition between the network device and the terminal on the at least one carrier becomes worse, a specific carrier in the at least one carrier is configured for another terminal, several specific carriers in the at least one carrier cannot serve the terminal simultaneously, a specific carrier in the at least one carrier is deactivated, load of a specific carrier in the at least one carrier is excessively high or excessively low, or a specific carrier in the at least one carrier has no allocatable resource (for example, there is no allocatable resource available for an uplink or no allocatable resource available for a downlink), or when another case that causes the network device to need to adjust the wireless communication capability that needs to be supported by the terminal in at least one cell occurs, the network device reconfigures the at least one new cell for the terminal. A process in which the network device configures the at least one new cell for the terminal includes: The network device configures a wireless communication capability that needs to be supported by the terminal in the at least one new cell. The network device may reconfigure the at least one new cell for the terminal by using an RRC reconfiguration (RRC reconfiguration) message.

For example, the process in which the network device reconfigures the at least one new cell for the terminal and the process in which the network device configures the at least one cell for the terminal are different in only occurrence time points, and specific implementation forms may be the same. For example, the at least one new cell may belong to a frequency band in a second frequency band combination that can be supported by the terminal. The second frequency band combination may include only at least one frequency band to which the at least one new cell belongs. Alternatively, the second frequency band combination may include not only at least one frequency band to which the at least one new cell belongs, but also another frequency band.

The first frequency band combination and the second frequency band combination may include a same frequency band, that is, are a same frequency band combination. A part of frequency bands in the first frequency band combination and the second frequency band combination may alternatively be different. For a cell that exists in the at least one cell but does not exist in the at least one new cell, the network device needs to release a cell in a frequency band.

The network device activates (activates) or deactivates (deactivates), by using signaling, the at least one cell configured for the terminal. A cell in an activated state may be referred to as an activated cell (the activated cell can perform data transmission with the terminal). A cell in a deactivated state may be referred to as a deactivated cell (the deactivated cell cannot perform data transmission with the terminal). Both the activated cell of the terminal and the deactivated cell of the terminal may be released. A cell releasing manner includes but is not limited to that the network device sends an RRC message to the terminal. The terminal receives the RRC message, and releases a corresponding cell based on the RRC message. Cell releasing may be understood as releasing of an established radio bearer and a radio resource, for example, releasing of a resource on at least one carrier corresponding to the cell.

The example in which the quantity of PDSCHs that can be simultaneously processed is the wireless communication capability of the terminal is still used. If the wireless communication capability information of the terminal may be represented as {band A: four PDSCHs}, {band A: one PDSCH; band B: three PDSCHs}, and {band A: three PDSCHs; band B: one PDSCH}: At a moment t1, the network device may configure the at least one cell for the terminal based on the wireless communication capability information of the terminal. For example, the network device configures a cell 1 for the terminal in the band A, and configures a cell 2 for the terminal in the band B. In addition, a quantity of PDSCHs that need to be capable of being simultaneously processed by the terminal in the cell 1 is one, and a quantity of PDSCHs that need to be capable of being simultaneously processed in the cell 2 is three.

If wireless communication capabilities that need to be supported by the terminal in the cell 1 and the cell 2 need to be adjusted at the moment t2, in a possible implementation, the network device may release the cell 2, and configure a new cell for the terminal in the band A, and a quantity of PDSCHs that need to be capable of being simultaneously processed by the terminal in the new cell is four. Cell identification information of the new cell may be different from or the same as cell identification information of the cell 1 (when the cell identification information of the new cell is the same as the cell identification information of the cell 1, it may be understood as that the network device reconfigures the quantity of PDSCHs that need to be capable of being simultaneously processed by the terminal in the cell 1 to four). In another possible implementation, the network device reconfigures a new cell 1 for the terminal in the band A, and a quantity of PDSCHs that need to be capable of being simultaneously processed by the terminal in the new cell 1 is three. The network device reconfigures a new cell 2 for the terminal in the band B, and a quantity of PDSCHs that need to be capable of being simultaneously processed by the terminal in the new cell 2 is one. Cell identification information of the new cell 1 may be different from or the same as cell identification information of the cell 1 (when the cell identification information of the new cell 1 is the same as the cell identification information of the cell 1, it may be understood as that the network device reconfigures the quantity of PDSCHs that need to be capable of being simultaneously processed by the terminal in the cell 1 to three). Cell identification information of the new cell 2 may be different from or the same as cell identification information of the cell 2 (when the cell identification information of the new cell 2 is the same as cell identification information of the cell 2, it may be understood as that the network device reconfigures the quantity of PDSCHs that need to be capable of being simultaneously processed by the terminal in the cell 2 to one).

In this application, the cell identification information may include at least one of the following: a relative cell frequency, an absolute cell frequency, a physical cell identifier (physical cell identifier, PCI), a cell identity (Cell Identity), a cell global identifier (cell global identifier, CGI), a cell index, an uplink carrier identifier corresponding to a cell, for example, an identifier of a normal uplink carrier (normal uplink carrier) corresponding to the cell or an identifier of a supplementary uplink (supplementary uplink, SUL) carrier corresponding to the cell, and a downlink carrier identifier corresponding to the cell.

In another embodiment provided in this application, the network device may send at least one piece of cell configuration information to the terminal. There may be a plurality of pieces of cell configuration information corresponding to a specific cell in the at least one piece of cell configuration information. In this way, when the network device configures or reconfigures a wireless communication capability that needs to be supported by the terminal in the specific cell, the network device may send indication information to the terminal, where the indication information indicates a specific piece of cell configuration information in at least one piece of cell configuration information corresponding to the cell. The indication information may specifically include a configuration identifier of the cell configuration information, or include a specific status indication associated with the cell configuration information. The indication information may also be simultaneously for activating or deactivating the cell. The indication information may be sent by the network device to the terminal through the cell, or may be sent by the network device to the terminal through another cell.

In another embodiment provided in this application, when adjusting the wireless communication capability that needs to be supported by the terminal in the at least one cell, the network device may only need to ensure that a wireless communication capability that needs to be supported by the terminal in at least one cell in the activated state does not exceed the wireless communication capability of the terminal. In other words, only a wireless communication capability that needs to be supported by the terminal in the activated cell occupies or is calculated into the wireless communication capability of the terminal. In comparison with that the network device needs to ensure that a sum of the wireless communication capability that needs to be supported by the terminal in the at least one configured cell does not exceed a capability configuration constraint of the wireless communication capability of the terminal, this improves flexibility of adjusting the wireless communication capability that needs to be supported by the terminal in the at least one cell.

In an embodiment provided in this application, a wireless communication capability that needs to be supported by the terminal in a configured but unactivated cell does not occupy or is not calculated into the wireless communication capability of the terminal. In this way, a waste of the wireless communication capability of the terminal is reduced, and network resource utilization is improved.

In an embodiment provided in this application, to avoid or reduce a case in which a wireless communication capability that needs to be supported by the terminal in at least one activated cell exceeds the wireless communication capability of the terminal, when adjusting the wireless communication capability that needs to be supported by the terminal in the at least one cell, the network device needs to deactivate (deactivate) the at least one activated cell when necessary. For example, when the wireless communication capability that needs to be supported by the terminal in the at least one activated cell does not exceed the wireless communication capability of the terminal exactly, when a communication condition between an activated cell and the terminal is poor, the network device expects to reconfigure, for another activated cell having a good communication condition with the terminal, a wireless communication capability that is of the terminal and that is occupied by the activated cell, that is, enhance a wireless communication capability that needs to be supported by the terminal in the another activated cell having the good communication condition with the terminal. In this case, if the activated cell is not deactivated (deactivated), the wireless communication capability that needs to be supported by the terminal in the at least one activated cell may exceed the wireless communication capability of the terminal.

Refer to a diagram of a communication method 200 provided in FIG. 2. The communication method 200 specifically includes the following steps.

S201: A network device sends M pieces of cell configuration information to a terminal, where M is a positive integer.

For example, the network device may receive wireless communication capability information from the terminal. The network device may generate the M pieces of cell configuration information based on the wireless communication capability information of the terminal. The network device may send the M pieces of cell configuration information to the terminal by using at least one RRC message.

The wireless communication capability information of the terminal may indicate at least one of (I) to (IV) indicated by the wireless communication capability information of the terminal in the embodiment corresponding to FIG. 1. For example, the wireless communication capability information of the terminal may further indicate a maximum quantity of cells that may be simultaneously configured for the terminal and/or a maximum quantity of cells that may be simultaneously activated for the terminal. The maximum quantity of cells that may be simultaneously configured and/or the maximum quantity of cells that may be simultaneously activated may be at a frequency band granularity (that is, for each frequency band, there is correspondingly a maximum quantity of cells that may be simultaneously configured in the frequency band and/or a maximum quantity of cells that may be simultaneously activated in the frequency band), may be at a frequency band combination granularity (that is, for each frequency band combination, there is correspondingly a maximum quantity of cells that may be simultaneously configured in the frequency band combination and/or a maximum quantity of cells that may be simultaneously activated in the frequency band combination), or may be at a terminal granularity (that is, for each terminal, there is correspondingly a maximum quantity of cells that may be simultaneously configured for the terminal and/or a maximum quantity of cells that may be simultaneously activated for the terminal).

For example, the wireless communication capability information of the terminal may include a maximum quantity X of cells that may be simultaneously configured and/or a maximum quantity Y of cells that may be simultaneously activated, where X and Y are positive integers. Optionally, if the network device configures only one cell in each frequency band, the network device may obtain, based on at least one of (I) to (IV) indicated by the wireless communication capability information, the maximum quantity of cells that may be simultaneously configured and/or the maximum quantity of cells that may be simultaneously activated. For example, the wireless communication capability information of the terminal may indicate {band A: four PDSCHs}, {band A: three PDSCHs; band B: one PDSCH}, {band A: two PDSCHs; band C: two PDSCHs}, and {band A: one PDSCH; band D: three PDSCHs}. In this case, the network device may determine that a maximum quantity, at the terminal granularity, of cells that may be simultaneously configured is four (for example, a cell located in the band A, a cell located in the band B, a cell located in the band C, and a cell located in the band D may be simultaneously configured) and/or that a maximum quantity, at the terminal granularity, of cells that may be simultaneously activated is two (for example, the cell located in the band A and the cell located in the band B may be simultaneously activated, the cell located in the band A and the cell located in the band C may be simultaneously activated, or the cell located in the band A and the cell located in the band D may be simultaneously activated). Alternatively, the network device may determine that maximum quantities, at the frequency band combination granularity, of cells that may be simultaneously configured are {band A: 1}, {band A, band B: 2}, {band A, band C: 2}, and {band A, band D: 2} and/or that maximum quantities, at the frequency band combination granularity, of cells that may be simultaneously activated are {band A: 1}, {band A, band B: 2}, {band A, band C: 2}, and {band A, band D: 2}.

Each of the M pieces of cell configuration information includes at least a capability parameter of a cell corresponding to the cell configuration information. The capability parameter of the cell corresponding to the cell configuration information indicates a wireless communication capability that needs to be supported by the terminal in the cell corresponding to the cell configuration information. Because there is a correspondence between a cell and a carrier, the wireless communication capability that needs to be supported by the terminal in the cell corresponding to the cell configuration information may include: a wireless communication capability that needs to be supported by the terminal in at least one uplink carrier corresponding to the cell and/or a wireless communication capability that needs to be supported by the terminal in at least one downlink carrier corresponding to the cell. In another implementation, the wireless communication capability that needs to be supported by the terminal in the cell corresponding to the cell configuration information may include a sum of a wireless communication capability that needs to be supported by the terminal in at least one uplink carrier corresponding to the cell and a wireless communication capability that needs to be supported by the terminal in at least one downlink carrier corresponding to the cell.

The M pieces of cell configuration information may correspond to x cells, where x is a positive integer. When x is less than M, it indicates that a specific cell corresponds to a plurality of pieces of cell configuration information. The x cells may belong to a frequency band in one frequency band combination that can be supported by the terminal. In other words, the x cells do not cross frequency band combinations. The x cells may alternatively belong to frequency bands in a plurality of frequency band combinations that can be supported by the terminal. In other words, the x cells may cross the frequency band combinations. If the wireless communication capability information of the terminal indicates the maximum quantity X, at the terminal granularity, of cells that may be simultaneously configured, x is a positive integer not greater than X.

In an implementation of this embodiment of this application, when the x cells belong to the frequency band in the frequency band combination (which may be referred to as a third frequency band combination) that can be supported by the terminal, for the cases (II) to (IV) of the wireless communication capability information of the terminal, the M pieces of cell configuration information respectively satisfy the following: (II) When the x cells are located in one frequency band in the third frequency band combination, a sum of wireless communication capabilities that need to be supported by the terminal in the x cells and that are indicated by largest capability parameters of the x cells may exceed a wireless communication capability that can be supported by the terminal in the frequency band. In this embodiment of this application, a largest capability parameter of a specific cell is a largest capability parameter in at least one capability parameter of the cell included in at least one piece of cell configuration information corresponding to the cell. When the x cells are located in different frequency bands in the third frequency band combination, for T (T is a positive integer) cells that are in the x cells and that belong to a same frequency band (which may be referred to as a first frequency band) in the third frequency band combination, a sum of wireless communication capabilities that need to be supported by the terminal in the T cells and that are indicated by largest capability parameters of the T cells may exceed a wireless communication capability that can be supported by the terminal in the first frequency band. (III) The sum of the wireless communication capabilities that need to be supported by the terminal in the x cells and that are indicated by the largest capability parameters of the x cells may exceed a wireless communication capability that can be supported by the terminal in the third frequency band combination. (IV) The sum of the wireless communication capabilities that need to be supported by the terminal in the x cells and that are indicated by the largest capability parameters of the x cells may exceed a wireless communication capability that can be supported by the terminal.

(II) to (IV) that respectively need to be satisfied by the M pieces of cell configuration information may be understood as a configuration constraint that needs to be followed when the network device configures a wireless communication capability that needs to be supported by the terminal in at least one cell.

A correspondence between cell configuration information and a cell may be reflected in that the cell configuration information includes cell identification information (information that identifies the cell, a cell identity for short) of the cell, or may be reflected in that the cell configuration information needs to be sent by the network device through the cell.

There may be r pieces of cell configuration information corresponding to a first cell (which may be referred to as cell configuration information of the first cell), where r is a positive integer. The first cell may be any one of the x cells. When r=M, it may be understood as that the M pieces of cell configuration information correspond to the first cell, that is, are all the cell configuration information of the first cell. In an implementation, the network device may send, in the first cell, the cell configuration information of the first cell. In this case, the cell configuration information of the first cell may include a cell identity of the first cell, or may not include the cell identity of the first cell. In another implementation, the network device may send the cell configuration information of the first cell in any cell. In this case, the cell configuration information of the first cell may include a cell identity of the first cell. Each of the r pieces of cell configuration information includes at least a capability parameter of the first cell, and the capability parameter of the first cell indicates a wireless communication capability that needs to be supported by the terminal in the first cell.

For the cases (I) to (IV) of the wireless communication capability information of the terminal, the r pieces of cell configuration information respectively need to satisfy the following: (I) A wireless communication capability that needs to be supported by the terminal in the first cell and that is indicated by a capability parameter included in any cell configuration information of the first cell does not exceed a largest value in wireless communication capabilities that can be supported by the terminal on a carrier corresponding to the first cell. The largest value in the wireless communication capabilities that can be supported by the terminal on the carrier corresponding to the first cell may be understood as a largest value in wireless communication capabilities that can be supported by the terminal on the carrier in all frequency band combinations that can be supported by the terminal and that include a frequency band to which the first cell belongs. An example in which a quantity of PDSCHs that can be simultaneously processed is the wireless communication capability of the terminal is used. If the wireless communication capability information of the terminal may be represented as: {carrier 1 in the band A: two PDSCHs; carrier 2 in the band A: two PDSCHs}, and {carrier 1 in the band A: one PDSCH; carrier 2 in the band A: one PDSCH; carrier 1 in the band B: one PDSCH; carrier 2 in the band B: one PDSCH}, and the first cell belongs to the band A and corresponds to the carrier 1 in the band A, a largest value in quantities of PDSCHs that can be simultaneously processed by the terminal on the carrier corresponding to the first cell is two. (II) The wireless communication capability that needs to be supported by the terminal in the first cell and that is indicated by the capability parameter included in the any cell configuration information of the first cell does not exceed a largest value in wireless communication capabilities that can be supported by the terminal in the frequency band to which the first cell belongs. The largest value in the wireless communication capabilities that can be supported by the terminal in the frequency band to which the first cell belongs may be understood as a largest value in wireless communication capabilities that can be supported by the terminal in the frequency band in all the frequency band combinations that can be supported by the terminal and that include the frequency band to which the first cell belongs. For example, if the wireless communication capability information of the terminal may be represented as {band A: four PDSCHs} and {band A: two PDSCHs; band B: two PDSCHs}, and the first cell belongs to the band A, a largest value in quantities of PDSCHs that can be simultaneously processed by the terminal in the frequency band to which the first cell belongs is four. (III) The wireless communication capability that needs to be supported by the terminal in the first cell and that is indicated by the capability parameter included in the any cell configuration information of the first cell does not exceed a largest value in wireless communication capabilities that can be supported by the terminal in frequency band combinations including the frequency band to which the first cell belongs. The largest value in the wireless communication capabilities that can be supported by the terminal in the frequency band combinations including the frequency band to which the first cell belongs may be understood as a largest value in wireless communication capabilities that can be supported by the terminal in all the frequency band combinations that can be supported by the terminal and that include the frequency band to which the first cell belongs. For example, if the wireless communication capability information of the terminal may be represented as {band A: five PDSCHs} and {band A, band B: four PDSCHs}, and the first cell belongs to the band A, a largest value in quantities of PDSCHs that can be simultaneously processed by the terminal in the frequency band combinations including the frequency band to which the first cell belongs is five. (IV) The wireless communication capability that needs to be supported by the terminal in the first cell and that is indicated by the capability parameter included in the any cell configuration information of the first cell does not exceed the wireless communication capability that can be supported by the terminal. For example, if the wireless communication capability information of the terminal may be represented as: {band A}, {band A, band B}, {four PDSCHs}, and the first cell belongs to the band A, a quantity, included in the any cell configuration information of the first cell, of PDSCHs that can be simultaneously processed does not exceed four.

(I) to (IV) that respectively need to be satisfied by the r pieces of cell configuration information may be understood as a configuration constraint that needs to be followed when the network device configures the wireless communication capability that needs to be supported by the terminal in the first cell.

The following describes the r pieces of cell configuration information by using an implementation (1) and an implementation (2). Cell configuration information corresponding to another cell may be deduced by analogy. Details are not described again.

Implementation (1): Each of the r pieces of cell configuration information includes at least the capability parameter and status information (the status information may include an activated state or a deactivated state). The cell configuration information may include more cell configuration information of the cell, for example, the cell identity and radio resource configuration information of the cell. That is, the cell configuration information may alternatively be represented as {capability parameter, status information, ...}. In this application, the cell configuration information may be simply represented as {capability parameter, status information}, but this does not mean that the cell configuration information includes only the two elements. As long as two pieces of cell configuration information include different element values, the two pieces of cell configuration information are different.

For example, at least one of the r pieces of cell configuration information may be associated with one transmission configuration indicator state (transmission configuration indicator state, TCI state).

For a definition of the TCI state, refer to the TCI-State in the 3GPP standard protocol TS 38.331 (for example, version v17.2.0). Simply speaking, one TCI state may be associated with at least one referenced reference signal or SSB, and quasi co-located (quasi co-located, QCL) information corresponding to the at least one referenced reference signal or SSB. The QCL information includes a QCL type (QCL type). The QCL type indicates at least one spatial characteristic parameter. The QCL type may include four categories, and each category is a different combination of at least one element in {Doppler shift (doppler shift), Doppler spread (doppler spread), average delay (average delay), delay spread (delay spread), spatial reception parameter (spatial Rx parameter)}. These elements may be referred to as spatial characteristic parameters. The network device may configure at least one TCI state (which may be referred to as at least one configured TCI state) for the terminal by using an RRC message. The network device may activate at least one (which may be referred to as at least one activated TCI state) of the at least one configured TCI state by using a MAC CE. The network device may indicate one of the at least one activated TCI state by using DCI. The TCI state is associated with at least one referenced reference signal or SSB, and QCL information corresponding to the at least one referenced reference signal or SSB. The QCL information includes a QCL type. The QCL type indicates at least one spatial characteristic parameter. When the DCI is for scheduling transmission on a PDSCH, the terminal may determine that the at least one spatial characteristic parameter of the PDSCH is the same as, similar to, or close to the at least one spatial characteristic parameter of the at least one referenced reference signal or SSB, and reference may be made to each other.

For example, an association relationship between the r pieces of cell configuration information and TCI states may be shown in Table 1.

**Table 1**

| TCI state | {Capability parameter, status information, ...} |
|---|---|
| TCI state 1 | {Capability parameter X₁, status information 1, ...} |
| ... | ... |
| TCI state P | {Capability parameter X_{P}, status information P, ...} |
| ... | ... |
| TCI state Q | {Capability parameter X_{Q}, status information Q, ...} |
| ... | ... |
| TCI state r | {Capability parameter Xᵣ, status information r, ...} |

For any two rows in Table 1, for example, a P^{th} row and a Q^{th} row (both P and Q are positive integers), the TCI state P and the TCI state Q may be the same or different, and the status information P and the status information Q may be the same or different.

Because the TCI state P and the TCI state Q may be the same (for example, referenced reference signals or SSBs and QCL information that are separately associated with the TCI state P and the TCI state Q are both the same), in Table 1, there may be a case in which one TCI state is associated with at least two of the r pieces of cell configuration information. In this case, Table 1 may alternatively be represented in a form of Table 2 below:

**Table 2**

| TCI state | Set of {capability parameter, status information, ...} |
|---|---|
| ... | ... |
| TCI state P | {Capability parameter X_{P}, status information P, ...}, {Capability parameter X_{Q}, status information Q, ...}, ... |
| ... | ... |

As shown in Table 2, one TCI state may be associated with one cell configuration information set, and the cell configuration information set includes at least one {capability parameter, status information, ...}. The TCI state P is associated with at least { capability parameter X_{P}, status information P, ...} and {capability parameter X_{Q}, status information Q, ...}. The TCI state P may further be associated with more cell configuration information in the r pieces of cell configuration information. In Table 2, there may alternatively be a case in which a set of {capability parameter, status information, ...} associated with a specific TCI state includes only one piece of cell configuration information. This is equivalent to that the TCI state is associated with one piece of cell configuration information.

Implementation (2): Each of the r pieces of cell configuration information includes at least the capability parameter. The cell configuration information may include more cell configuration information of the cell. That is, the cell configuration information may alternatively be represented as {capability parameter, ...}. In this application, the cell configuration information may be simply represented as {capability parameter}, but this does not mean that the cell configuration information includes only one element. As long as two pieces of cell configuration information include different element values, the two pieces of cell configuration information are different.

For example, at least one of the r pieces of cell configuration information may be associated with one TCI state. An association relationship between the M pieces of cell configuration information and TCI states may be shown in Table 3.

**Table 3**

| TCI state | {Capability parameter, ...} |
|---|---|
| TCI state 1 | {Capability parameter X₁, ...} |
| ... | ... |
| TCI state P | {Capability parameter X_{P}, ...} |
| ... | ... |
| TCI state Q | {Capability parameter X_{Q}, ...} |
| ... | ... |
| TCI state r | {Capability parameter Xᵣ, ...} |

For any two rows in Table 3, for example, a P^{th} row and a Q^{th} row (both P and Q are positive integers), the TCI state P and the TCI state Q may be the same or different.

Because the TCI state P and the TCI state Q may be the same, in Table 3, there may be a case in which one TCI state is associated with at least two of the r pieces of cell configuration information. In this case, Table 3 may alternatively be represented in a form of Table 4 below:

**Table 4**

| TCI state | Set of {capability parameter, ...} |
|---|---|
| ... | ... |
| TCI state P | {Capability parameter X_{P}, ...}, {capability parameter X_{Q}, ...}, ... |
| ... | ... |

For a relationship between Table 4 and Table 3, refer to Table 2 and Table 1 for understanding. Details are not described herein again.

Each of the r pieces of cell configuration information may have identification information, for example, a configuration index. Configuration indexes of cell configuration information corresponding to different cells may be independently or uniformly numbered. When the configuration indexes are independently numbered, numbers thereof may be expressed in a binary manner. For example, a positive integer, greater than or equal to log₂^{(r)}, of bits are needed to indicate numbers of the r pieces of cell configuration information. When the configuration indexes are uniformly numbered, numbers thereof may also be expressed in a binary manner. A positive integer, greater than or equal to log₂^{(M)}, of bits are needed to indicate numbers of the M pieces of cell configuration information. At least one cell configuration information set of the r pieces of cell configuration information may have identification information, for example, a set index. Set indexes of different cell configuration information sets may be independently or uniformly numbered.

In this application, the "TCI state" associated with the cell configuration information or the cell configuration information set is merely an example, and the "TCI state" may be replaced with another state associated with the cell configuration information or the cell configuration information set, for example, a carrier state. For an association relationship between the another state and the r pieces of cell configuration information, refer to the association relationship (the association relationship shown in any one of Table 1 to Table 4) between the "TCI states" and the r pieces of cell configuration information.

One of differences between the implementation (2) and the implementation (1) lies in that, in the implementation (2), the cell configuration information does not need to include the status information. This reduces signaling overheads.

S202: The network device sends first indication information to the terminal.

The first indication information indicates N of the M pieces of cell configuration information, where N is a positive integer. For example, the first indication information includes an indication of first cell configuration information. The first cell configuration information is one of the N pieces of cell configuration information.

For the implementation (1) in S201, in the N pieces of cell configuration information, there may be P pieces of cell configuration information including status information indicating the activated state, where P is a positive integer. Each of the P pieces of cell configuration information includes at least a capability parameter. The P pieces of cell configuration information respectively correspond to P cells. If the wireless communication capability information of the terminal indicates the maximum quantity Y, at the terminal granularity, of cells that may be simultaneously activated, P is a positive integer not greater than Y. At least one frequency band to which the P cells belong may belong to a first frequency band combination that can be supported by the terminal. The first frequency band combination may include only the at least one frequency band to which the P cells belong. Alternatively, the first frequency band combination may include not only the at least one frequency band to which the P cells belong, but also another frequency band.

For the cases (I) to (IV) of the wireless communication capability information of the terminal, wireless communication capabilities that need to be supported by the terminal in the P cells respectively need to satisfy an analogy of (I) to (IV) that respectively need to be satisfied by the wireless communication capability that needs to be supported by the terminal in the at least one cell in the embodiment corresponding to FIG. 1. When an uplink wireless communication capability and a downlink wireless communication capability are coupled or decoupled, the wireless communication capabilities that need to be supported by the terminal in the P cells also respectively need to satisfy the analogy of (I) to (IV) that respectively need to be satisfied by the wireless communication capability that needs to be supported by the terminal in the at least one cell in the embodiment corresponding to FIG. 1. Specifically, "at least one" in (I) to (IV) that need to be satisfied by the wireless communication capability that needs to be supported by the terminal in the at least one cell in the embodiment corresponding to FIG. 1 is replaced with "P", to obtain (I) to (IV) that respectively need to be satisfied by the wireless communication capabilities that need to be supported by the terminal in the P cells. Details are not described herein again.

(I) to (IV) that respectively need to be satisfied by the P pieces of cell configuration information may be understood as a configuration constraint that needs to be followed when the network device determines the wireless communication capabilities that need to be supported by the terminal in the P cells.

The P pieces of cell configuration information respectively include capability parameters of the P cells. Correspondingly, the terminal determines, as the wireless communication capabilities that respectively need to be supported by the terminal in the P cells, wireless communication capabilities that respectively need to be supported by the terminal in the P cells and that are indicated by the P capability parameters. When M=r, and P=1, it may be understood as that the first indication information indicates the first cell configuration information, where the first cell configuration information is one of the r pieces of cell configuration information of the first cell, and the first cell configuration information includes a first capability parameter of the first cell. Correspondingly, the terminal determines, as the wireless communication capability that needs to be supported by the terminal in the first cell, a wireless communication capability that needs to be supported by the terminal in the first cell and that is indicated by the first capability parameter.

For the implementation (2) in S201, each of the N pieces of cell configuration information includes at least a capability parameter of a cell. The N pieces of cell configuration information respectively correspond to N cells. If the wireless communication capability information of the terminal indicates the maximum quantity Y, at the terminal granularity, of cells that may be simultaneously activated, N is a positive integer not greater than Y. At least one frequency band to which the N cells belong may belong to a first frequency band combination that can be supported by the terminal. The first frequency band combination may include only the at least one frequency band to which the N cells belong. Alternatively, the first frequency band combination may include not only the at least one frequency band to which the N cells belong, but also another frequency band.

For the cases (I) to (IV) of the wireless communication capability information of the terminal, wireless communication capabilities that need to be supported by the terminal in the N cells respectively need to satisfy an analogy of (I) to (IV) that respectively need to be satisfied by the wireless communication capability that needs to be supported by the terminal in the at least one cell in the embodiment corresponding to FIG. 1. When an uplink wireless communication capability and a downlink wireless communication capability are coupled or decoupled, the wireless communication capabilities that need to be supported by the terminal in the N cells also respectively need to satisfy the analogy of (I) to (IV) that respectively need to be satisfied by the wireless communication capability that needs to be supported by the terminal in the at least one cell in the embodiment corresponding to FIG. 1. Specifically, "at least one" in (I) to (IV) that need to be satisfied by the wireless communication capability that needs to be supported by the terminal in the at least one cell in the embodiment corresponding to FIG. 1 is replaced with "N", to obtain (I) to (IV) that respectively need to be satisfied by the wireless communication capabilities that need to be supported by the terminal in the N cells. Details are not described herein again.

(I) to (IV) that respectively need to be satisfied by the N pieces of cell configuration information may be understood as a configuration constraint that needs to be followed when the network device determines the wireless communication capabilities that need to be supported by the terminal in the N cells.

The N pieces of cell configuration information respectively include capability parameters of the N cells. Correspondingly, the terminal determines, as the wireless communication capabilities that respectively need to be supported by the terminal in the N cells, wireless communication capabilities that respectively need to be supported by the terminal in the N cells and that are indicated by the N capability parameters. When M=r, and N=1, it may be understood as that the first indication information indicates the first cell configuration information, where the first cell configuration information is one of the r pieces of cell configuration information of the first cell, and the first cell configuration information includes a first capability parameter of the first cell. Correspondingly, the terminal determines, as the wireless communication capability that needs to be supported by the terminal in the first cell, a wireless communication capability that needs to be supported by the terminal in the first cell and that is indicated by the first capability parameter.

In a first implementation, the first indication information may include identification information of N of the M pieces of cell configuration information, for example, configuration indexes of the N pieces of cell configuration information. Optionally, the first indication information may include identification information of at least one cell configuration information set of the N of the M pieces of cell configuration information, for example, a set index of the at least one cell configuration information set.

For example, the first indication information may be carried in one indication message (for example, a MAC CE or DCI). The indication message may include the identification information of the at least one cell configuration information set of the N pieces of cell configuration information. The indication message may alternatively include configuration identification information of the N pieces of cell configuration information. The indication message may alternatively include a bitmap (bitmap). The bitmap includes at least one bit (bit). Each of the at least one bit may correspond to one piece of cell configuration information. In this case, the bitmap may include M bits. Optionally, each of the at least one bit may alternatively correspond to one cell configuration information set. A value of a bit indicates whether cell configuration information or a cell configuration information set corresponding to the bit needs to take effect. When the value of the bit is a first value (for example, the value is 1), it indicates that cell configuration information or the cell configuration information set corresponding to the bit needs to take effect. When the value of the bit is a second value (for example, the value is 0), it indicates that the cell configuration information or the cell configuration information set corresponding to the bit does not need to take effect. For example, in the bitmap included in the indication message that carries the first indication information, a value of a bit corresponding to the N pieces of cell configuration information in the bitmap is the first value (for example, the value is 1), and a value of a bit corresponding to remaining cell configuration information is the second value (for example, the value is 0). The indication message may be sent by the network device to the terminal in any activated cell.

Optionally, the first indication information may be carried in a plurality of indication messages (for example, MAC CEs or DCI). In this case, each indication message includes configuration identification information of at least one piece of cell configuration information. Sending manners or sending time points of the plurality of indication messages may be the same or different. For example, the first indication information may be carried in N indication messages, and each indication message includes configuration identification information of one piece of cell configuration information. Cells corresponding to cell configuration information indicated by all indication messages may be different from each other. For example, the network device may send a first indication message to the terminal. The first indication message indicates the first cell configuration information. The first cell configuration information is any one of the M pieces of cell configuration information. The first cell configuration information corresponds to the first cell. The first indication message is any one of the N indication messages. For example, each indication message may be sent by the network device to the terminal in a cell corresponding to the cell configuration information indicated by the indication message. For example, the network device may send the first indication message in the first cell.

In a second implementation, when the M pieces of cell configuration information are associated with a TCI state, the first indication information may indicate N TCI states (for example, the N TCI states in Table 1 or Table 3), to indicate the N pieces of cell configuration information associated with the N TCI states. The first indication information may alternatively indicate one TCI state (for example, one TCI state in Table 2 or Table 4), to indicate a cell configuration information set associated with the TCI state (the cell configuration information set includes the N pieces of cell configuration information).

For example, the first indication information may be carried in one indication message (for example, a MAC CE or DCI). For example, the indication message may include a bitmap. The bitmap includes at least one bit. Each of the at least one bit corresponds to one TCI state. A value of a bit indicates whether a TCI state corresponding to the bit needs to take effect. When the value of the bit is a first value (for example, the value is 1), it indicates that the TCI state corresponding to the bit needs to take effect. When the value of the bit is a second value (for example, the value is 0), it indicates that the TCI state corresponding to the bit does not need to take effect. For example, in the bitmap included in the indication message that carries the first indication information, a value of a bit corresponding to the TCI state associated with the N pieces of cell configuration information in the bitmap is the first value (for example, the value is 1), and a value of a bit corresponding to a TCI state associated with remaining cell configuration information is the second value (for example, the value is 0).

Optionally, the first indication information may be carried in a plurality of indication messages (for example, MAC CEs or DCI). In this case, each indication message indicates at least one TCI state. Sending manners or sending time points of the plurality of indication messages may be the same or different. For example, the first indication information may be carried in N indication messages (for example, MAC CEs or DCI). Each indication message indicates one TCI state. The network device may send first indication message to the terminal. The first indication message indicates a first TCI state. The first TCI state is associated with the first cell configuration information. The first cell configuration information is any one of the M pieces of cell configuration information. The first cell configuration information corresponds to the first cell. The first indication message is any one of the N indication messages. For example, the TCI state indicated by each indication message may be associated with one of the M pieces of cell configuration information, and the indication message may be sent by the network device to the terminal in a cell corresponding to the cell configuration information. For example, the network device may send the first indication message in the first cell.

In the first and second implementations, when the first indication information is sent via one indication message, each of the M pieces of cell configuration information in S201 may include a cell identity of the cell corresponding to the cell configuration information. Optionally, because the indication message is sent by the network device to the terminal in a specific activated cell, cell configuration information corresponding to the activated cell may not need to include a cell identity corresponding to the activated cell, and cell configuration information corresponding to another cell needs to include the cell identity corresponding to the activated cell. When the first indication information is sent via the plurality of indication messages, each of the M pieces of cell configuration information in S201 may include a cell identity of the cell corresponding to the cell configuration information. For example, because the first indication message is sent in the first cell, the first cell configuration information may not need to include the cell identity of the first cell.

Optionally, the method 200 may further include S203. S203: The network device sends second indication information to the terminal.

For example, if the case in which the wireless communication capability that needs to be supported by the terminal in the at least one cell needs to be adjusted in the embodiment corresponding to FIG. 1 occurs, the network device may send the second indication information to the terminal.

The second indication information indicates Q of the M pieces of cell configuration information, where Q is a positive integer. The Q pieces of cell configuration information are not completely the same as the N pieces of cell configuration information indicated by the first indication information. That is, the Q pieces of cell configuration information and the N pieces of cell configuration information may have same cell configuration information, or may have no same cell configuration information. In this way, the wireless communication capability that needs to be supported by the terminal in the at least one cell can be adjusted.

Because the wireless communication capability that can be supported by the terminal is definite, that the network device adjusts the wireless communication capability that needs to be supported by the terminal in the at least one cell may also be referred to as sharing of the wireless communication capability of the terminal between different cells or sharing of the wireless communication capability of the terminal between carriers corresponding to the different cells.

For example, the second indication information and the first indication information are different in only sending time points, and specific implementation forms may be the same. For example, for the implementation (1) in S201, in the Q pieces of cell configuration information, there may be R pieces of cell configuration information including status information indicating the activated state, where R is a positive integer. The R pieces of cell configuration information correspond to R cells. The R cells may respectively belong to different frequency bands in a second frequency band combination that can be supported by the terminal. The second frequency band combination may include only at least one frequency band to which the R cells belong. Alternatively, the second frequency band combination may include not only at least one frequency band to which the R cells belong, but also another frequency band.

For the M pieces of cell configuration information, for cell configuration information that exists in the P pieces of cell configuration information but does not exist in the R pieces of cell configuration information, if a cell corresponding to the cell configuration information does not exist in at least one cell corresponding to the R pieces of cell configuration information, the network device needs to deactivate the cell corresponding to the cell configuration information. If the cell corresponding to the cell configuration information exists in at least one cell corresponding to the R pieces of cell configuration information, the network device needs to deactivate a capability parameter included in the cell configuration information. For example, in the Q pieces of cell configuration information, there may be S pieces of cell configuration information including status information indicating the deactivated state, where S is a positive integer.

The R pieces of cell configuration information respectively include capability parameters of the R cells. Correspondingly, the terminal determines, as wireless communication capabilities that respectively need to be supported by the terminal in the R cells, wireless communication capabilities that respectively need to be supported by the terminal in the R cells and that are indicated by the R capability parameters. When M=r, and R=1, it may be understood as that the second indication information indicates second cell configuration information, the second cell configuration information is one of the r pieces of cell configuration information of the first cell, and the second cell configuration information is different from the first cell configuration information. The second cell configuration information includes a second capability parameter of the first cell. Correspondingly, the terminal determines, as the wireless communication capability that needs to be supported by the terminal in the first cell, a wireless communication capability that needs to be supported by the terminal in the first cell and that is indicated by the second capability parameter.

For the implementation (2) in S201, the Q pieces of cell configuration information may correspond to Q cells. The Q cells may respectively belong to different frequency bands in a second frequency band combination that can be supported by the terminal. The second frequency band combination may include only at least one frequency band to which the Q cells belong. Alternatively, the second frequency band combination may include not only at least one frequency band to which the Q cells belong, but also another frequency band.

The first frequency band combination and the second frequency band combination may include a same frequency band, that is, are a same frequency band combination. A part of frequency bands in the first frequency band combination and the second frequency band combination may alternatively be different.

The Q pieces of cell configuration information respectively include capability parameters of the Q cells. Correspondingly, the terminal determines, as wireless communication capabilities that respectively need to be supported by the terminal in the Q cells, wireless communication capabilities that respectively need to be supported by the terminal in the Q cells and that are indicated by the Q capability parameters included in the Q pieces of cell configuration information. When M=r, and Q=1, it may be understood as that the second indication information indicates second cell configuration information, the second cell configuration information is one of the r pieces of cell configuration information of the first cell, and the second cell configuration information is different from the first cell configuration information. The second cell configuration information includes a second capability parameter of the first cell. Correspondingly, the terminal determines, as the wireless communication capability that needs to be supported by the terminal in the first cell, a wireless communication capability that needs to be supported by the terminal in the first cell and that is indicated by the second capability parameter.

In this application, in the implementation (1) in S201, because the cell configuration information includes the status information, when the first indication information or the second indication information indicates a specific piece of cell configuration information, if status information included in the cell configuration information is the activated state, a wireless communication capability that needs to be supported by the terminal in a cell corresponding to the cell configuration information is set to a capability parameter included in the cell configuration information. For example, status information included in at least one piece of cell configuration information indicated by the first indication information or the second indication information may all be the activated state. In addition, a cell corresponding to the cell configuration information may be activated based on the activated state included in the cell configuration information. Optionally, the cell corresponding to the cell configuration information may alternatively be additionally activated by using an additional message (for example, a MAC CE or DCI). In addition, if the status information included in the cell configuration information is the deactivated state, a cell corresponding to the cell configuration information is deactivated (deactivated). If all status information included in the M pieces of cell configuration information is the activated state, the network device may alternatively additionally deactivate (deactivate), by using an additional message (for example, a MAC CE or DCI), a cell that needs to be deactivated.

In the implementation (2) in S201, because the cell configuration information does not include status information, when the first indication information or the second indication information indicates a specific piece of cell configuration information, a wireless communication capability that needs to be supported by the terminal in a cell corresponding to the cell configuration information is set to a capability parameter included in the cell configuration information. In addition, the cell corresponding to the cell configuration information may be activated based on the indication information. Optionally, the cell corresponding to the cell configuration information may alternatively be additionally activated by using an additional message (for example, a MAC CE or DCI). In addition, the terminal determines that an activated cell other than at least one cell corresponding to the cell configuration information indicated by the first indication information or the second indication information needs to be deactivated (deactivated). Optionally, the network device may alternatively additionally deactivate (deactivate), by using an additional message (for example, a MAC CE or DCI), the activated cell other than the at least one cell corresponding to the cell configuration information indicated by the first indication information or the second indication information.

The following describes the communication method 200 by using a specific example.

The example in which the quantity of PDSCHs that can be simultaneously processed is the wireless communication capability of the terminal is used. For example, the wireless communication capability information of the terminal may be represented as {band A: two PDSCHs} and {band A: one PDSCH; band B: one PDSCH}.

A. For the implementation (1) in S201, the network device sends four pieces of cell configuration information to the terminal: cell configuration information 1: {cell identity 1, quantity of PDSCHs is two, activated state}; cell configuration information 2: {cell identity 1, quantity of PDSCHs is one, activated state}; cell configuration information 3: {cell identity 2, quantity of PDSCHs is one, activated state}; and cell configuration information 4: {cell identity 2, quantity of PDSCHs is one, deactivated state}. The cell identity 1 is an identity of a cell 1 located in the band A, and the cell identity 2 is an identity of a cell 2 located in the band B. A carrier corresponding to the cell 1 may be a carrier 1 (CC 1). A carrier corresponding to the cell 2 may be a carrier 2 (CC 2).

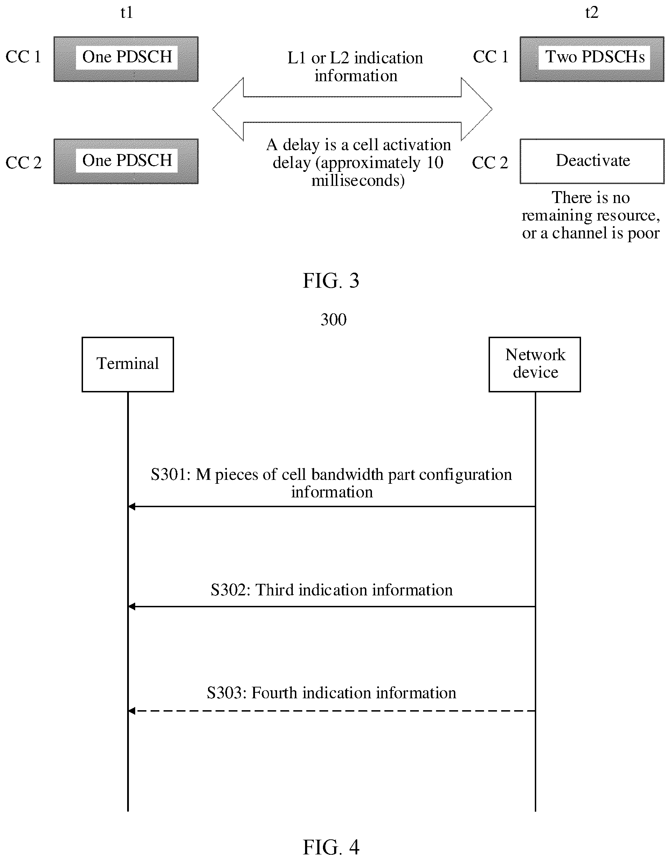

As shown in FIG. 3, at a moment t1, the network device may send the first indication information to the terminal. The first indication information may indicate cell configuration information 2 and cell configuration information 3 (for example, both the cell 1 and the cell 2 have available bandwidth, and channel quality satisfies a communication requirement), that is, indicate to set a quantity of PDSCHs that need to be capable of being simultaneously processed by the terminal in the cell 1 to one and set a quantity of PDSCHs that need to be capable of being simultaneously processed by the terminal in the cell 2 to one. The cell 1 and the cell 2 may be respectively activated based on the activated states included in the cell configuration information 2 and the cell configuration information 3. Optionally, the cell 1 and the cell 2 may alternatively be activated by using an additional message (for example, a MAC CE or DCI).

In a first implementation, the first indication information may be carried in one indication message. The indication message may include identification information of a cell configuration information set of the cell configuration information 2 and the cell configuration information 3. The indication message may alternatively include identification information of the cell configuration information 2 and identification information of the cell configuration information 3. The indication message may alternatively include a bitmap: 0110, indicating the cell configuration information 2 corresponding to a second bit and the cell configuration information 3 corresponding to a third bit. The indication message may be sent by the network device to the terminal in any activated cell. Optionally, the first indication information may be carried in two indication messages. An indication message 1 in the two indication messages indicates the cell configuration information 2, and the indication message 1 is sent by the network device to the terminal in the cell 1. An indication message 2 in the two indication messages indicates the cell configuration information 3, and the indication message 2 is sent by the network device to the terminal in the cell 2. The indication message 1 may include the identification information of the cell configuration information 2, and the indication message 2 may include the identification information of the cell configuration information 3.

In a second implementation, the cell configuration information 1 to the cell configuration information 4 may be associated with TCI states.

If the cell configuration information 1 is associated with a TCI state 1, the cell configuration information 2 is associated with a TCI state 2, the cell configuration information 3 is associated with a TCI state 3, and the cell configuration information 4 is associated with a TCI state 4, the first indication information may be carried in one indication message. The indication message may indicate the TCI state 2 and the TCI state 3, to indicate the cell configuration information 2 associated with the TCI state 2 and the cell configuration information 3 associated with the TCI state 3. For example, the indication message may alternatively include a bitmap: 0110, indicating to make the TCI state 2 corresponding to a second bit and the TCI state 3 corresponding to a third bit take effect. The indication message may be sent by the network device to the terminal in any activated cell. Optionally, the first indication information may be carried in two indication messages. In the two indication messages, an indication message 1 indicates the TCI state 2, and an indication message 2 indicates the TCI state 3. For example, the indication message 1 is sent by the network device to the terminal in the cell 1, and the indication message 2 is sent by the network device to the terminal in the cell 2.

If the cell configuration information 2 and the cell configuration information 3 are associated with a TCI state 1, and the cell configuration information 1 and the cell configuration information 4 are associated with a TCI state 2, the first indication information may be carried in one indication message. The indication message may indicate the TCI state 1, to indicate the cell configuration information 2 and the cell configuration information 3 that are associated with the TCI state 1. For example, the indication message may alternatively include a bitmap: 10, indicating to make the TCI state 1 corresponding to a first bit take effect. For example, if the indication message is sent in the cell 1, the cell configuration information 2 may not need to include a cell identity of the cell 1.

As shown in FIG. 3, if the case in which the wireless communication capability that needs to be supported by the terminal in the at least one cell needs to be adjusted occurs (for example, the network device considers that no remaining resource is allocated to the terminal in the cell 2, or channel quality is poor), the network device may send the second indication information to the terminal at a moment t2. The second indication information may indicate the cell configuration information 1 and the cell configuration information 4, that is, indicate to reconfigure the quantity of PDSCHs that need to be capable of being simultaneously processed by the terminal in the cell 1 to two, and the cell 2 needs to be deactivated (deactivated). The cell 1 may be activated or maintained in the activated state based on the activated state included in the configuration information 1 of the cell. Optionally, the cell 1 may alternatively be activated or maintained in the activated state by using an additional message (for example, a MAC CE or DCI). The cell 2 may be deactivated (deactivated) based on the deactivated state included in the cell configuration information 4.

B. For the implementation (2) in S201, the network device sends three pieces of cell configuration information: cell configuration information 1: {cell identity 1, quantity of PDSCHs is two}; cell configuration information 2: {cell identity 1, quantity of PDSCHs is one}; and cell configuration information 3: {cell identity 2, quantity of PDSCHs is one}. The cell identity 1 is an identity of a cell 1 located in the band A, and the cell identity 2 is an identity of a cell 2 located in the band B. A carrier corresponding to the cell 1 may be a carrier 1 (CC 1). A carrier corresponding to the cell 1 may be a carrier 2 (CC 2).

As shown in FIG. 3, at a moment t1, the network device may send the first indication information to the terminal. The first indication information may indicate cell configuration information 2 and cell configuration information 3 (for example, both the cell 1 and the cell 2 have available bandwidth, and channel quality satisfies a communication requirement), that is, indicate to set a quantity of PDSCHs that need to be capable of being simultaneously processed by the terminal in the cell 1 to one and set a quantity of PDSCHs that need to be capable of being simultaneously processed by the terminal in the cell 2 to one. The cell 1 and the cell 2 may be activated based on the first indication information. Optionally, the cell 1 and the cell 2 may alternatively be activated by using an additional message (for example, a MAC CE or DCI).

In a first implementation, the first indication information may be carried in one indication message. The indication message may include identification information of a cell configuration information set of the cell configuration information 2 and the cell configuration information 3. The indication message may alternatively include identification information of the cell configuration information 2 and identification information of the cell configuration information 3. The indication message may alternatively include a bitmap: 011, indicating to make the cell configuration information 2 corresponding to a second bit and the cell configuration information 3 corresponding to a third bit take effect. The indication message may be sent by the network device to the terminal in any activated cell. Optionally, the first indication information may be carried in two indication messages. In the two indication messages, an indication message 1 includes identification information of the cell configuration information 2, and an indication message 2 includes identification information of the cell configuration information 3. The indication message 1 is sent by the network device to the terminal in the cell 1, and the indication message 2 is sent by the network device to the terminal in the cell 2.

In a second implementation, the cell configuration information 1 to cell configuration information 3 may be associated with TCI states.

If the cell configuration information 1 is associated with a TCI state 1, the cell configuration information 2 is associated with a TCI state 2, and the cell configuration information 3 is associated with a TCI state 3, the first indication information may be carried in one indication message. The indication message may indicate the TCI state 2 and the TCI state 3, to indicate the cell configuration information 2 associated with the TCI state 2 and the cell configuration information 3 associated with the TCI state 3. For example, the indication message may alternatively include a bitmap: 011, indicating to make the TCI state 2 corresponding to a second bit and the TCI state 3 corresponding to a third bit take effect. The indication message may be sent by the network device to the terminal in any activated cell. Optionally, the first indication information may be carried in two indication messages. In the two indication messages, an indication message 1 indicates the TCI state 2, and an indication message 2 indicates the TCI state 3. The indication message 1 is sent by the network device to the terminal in the cell 1, and the indication message 2 is sent by the network device to the terminal in the cell 2.

If the cell configuration information 1 is associated with a TCI state 1, and the cell configuration information 2 and the cell configuration information 3 are associated with a TCI state 2, the first indication information may be carried in one indication message. The indication message may indicate the TCI state 2, to indicate the cell configuration information 2 and the cell configuration information 3 that are associated with the TCI state 2. For example, the indication message may alternatively include a bitmap: 10, indicating to make the TCI state 1 corresponding to a first bit take effect.

As shown in FIG. 3, if the case in which the wireless communication capability that needs to be supported by the terminal in the at least one cell needs to be adjusted occurs (for example, the network device considers that no remaining resource is allocated to the terminal in the cell 2, or channel quality is poor), the network device may send the second indication information to the terminal at a moment t2. The second indication information may indicate the cell configuration information 1, that is, indicate to reconfigure the quantity of PDSCHs that need to be capable of being simultaneously processed by the terminal in the cell 1 to two, and the cell 2 needs to be deactivated (deactivated). The cell 1 may be activated based on the second indication information. Optionally, the cell 1 may alternatively be activated by using an additional message (for example, a MAC CE or DCI). The cell 2 may be determined, based on that the cell configuration information indicated by the second indication information does not include the cell identity 2, to need to be deactivated (deactivated). Optionally, the cell 2 may alternatively be deactivated (deactivated) by using an additional message (for example, a MAC CE or DCI).

For example, for an implementation of the second indication information in the foregoing implementations A and B, refer to the first indication information for understanding. The first indication information and the second indication information may be layer 1 (layer 1, L1) or layer 2 (layer 2, L2) indication information. In this application, L1 and L2 may be protocol stack layers in a wireless transmission network. For example, L1 may be a physical layer, and L2 may be a data link layer. The L1 indication information may include DCI, and the L2 indication information may include a MAC CE. In this way, according to the method 200, a delay in adjusting, by the network device, the wireless communication capability that needs to be supported by the terminal in the at least one cell may be enabled to be approximately equivalent to a cell activation delay, for example, approximately 10 milliseconds (ms).

If the first indication information or the second indication information is carried in one indication message, and is sent in the cell 1, the cell configuration information 1 and the cell configuration information 2 may not need to include the cell identity of the cell 1. If the first indication information or the second indication information is carried in two indication messages, and is separately sent in the cell 1 and the cell 2, the cell configuration information 1 and the cell configuration information 2 may not need to include the cell identity of the cell 1, and the cell configuration information 3 and the cell configuration information 4 may not need to include the cell identity of the cell 2.

In this application, in a carrier aggregation (carrier aggregation, CA) or dual connectivity (dual connectivity, DC) scenario, the first indication information or the second indication information may be sent in only a primary cell (primary cell, PCell). For example, the PCell may remain in the activated state. That is, the network device does not deactivate (deactivate) the PCell by using the first indication information, the second indication information, or an additional message (for example, a MAC CE or DCI).

In the communication method 200, when the wireless communication capability that needs to be supported by the terminal in the at least one cell is adjusted, cell releasing may not need to be performed. In addition, when the first indication information or the second indication information is a MAC CE or DCI, the delay in adjusting the wireless communication capability that needs to be supported by the terminal in the at least one cell is also shorter (for example, several milliseconds). Therefore, in the communication method 200, a speed of adjusting the wireless communication capability that needs to be supported by the terminal in the at least one cell is faster, so that a change of a wireless communication environment between the network device and the terminal can be more quickly adapted, and the wireless communication capability of the terminal and network resource utilization are improved.

In addition, in this application, a measurement capability, an uplink synchronization capability, or a downlink synchronization capability of the terminal may be decoupled from the wireless communication capability. In this way, regardless of whether the terminal needs to support a wireless communication capability in a specific cell, the terminal can maintain measurement, uplink synchronization, or downlink synchronization in the cell. According to this decoupling design, the speed of adjusting, by the network device, the wireless communication capability that needs to be supported by the terminal in the at least one cell can be enabled to be faster.

In another embodiment provided in this application, the network device may send at least one piece of cell bandwidth part (bandwidth part, BWP) configuration information to the terminal. There may be a plurality of pieces of cell BWP configuration information corresponding to a specific cell in the at least one piece of cell BWP configuration information. In this way, when the network device configures or reconfigures a wireless communication capability that needs to be supported by the terminal in the specific cell, the network device may send indication information to the terminal, where the indication information indicates a specific piece of cell BWP configuration information in at least one piece of cell BWP configuration information corresponding to the cell. The indication information may specifically include a configuration identifier of the cell BWP configuration information, or include a specific status indication associated with the cell BWP configuration information. The indication information may also be simultaneously for activating or deactivating a cell BWP. The indication information may be sent by the network device to the terminal through the cell, or may be sent by the network device to the terminal through another cell.

In an embodiment of this application, when adjusting the wireless communication capability that needs to be supported by the terminal in the at least one cell, the network device may only need to ensure that a sum of a wireless communication capability that needs to be supported by the terminal in at least one activated BWP does not exceed the wireless communication capability of the terminal. In other words, a capability parameter that needs to be supported by the terminal in the activated BWP occupies or is calculated into the wireless communication capability of the terminal. This improves flexibility of adjusting the wireless communication capability that needs to be supported by the terminal in the at least one cell.

In an embodiment of this application, a capability parameter that needs to be supported by the terminal in a configured but unactivated BWP does not occupy or is not calculated into the wireless communication capability of the terminal. In this way, a waste of the wireless communication capability of the terminal is reduced, and network resource utilization is improved.

In an embodiment of this application, to avoid or reduce a case in which a wireless communication capability that needs to be supported by the terminal in at least one activated BWP exceeds the wireless communication capability of the terminal, when adjusting the wireless communication capability that needs to be supported by the terminal in the at least one cell, the network device needs to deactivate (deactivate) the at least one activated BWP when necessary. For example, when the wireless communication capability that needs to be supported by the terminal in the at least one activated BWP does not exceed the wireless communication capability of the terminal exactly, when a communication condition between an activated BWP and the terminal is poor, the network device expects to reconfigure, for another activated BWP having a good communication condition with the terminal, a wireless communication capability that is of the terminal and that is occupied by the activated BWP, that is, enhance a wireless communication capability that needs to be supported by the terminal in the another activated BWP having the good communication condition with the terminal. In this case, if the activated BWP is not deactivated (deactivated), the wireless communication capability that needs to be supported by the terminal in the at least one activated BWP may exceed the wireless communication capability of the terminal.

Refer to a diagram of a communication method 300 provided in FIG. 4. The communication method 300 specifically includes the following steps.

S301: A network device sends M pieces of cell bandwidth part configuration information to a terminal, where M is a positive integer.

For example, the network device may receive wireless communication capability information from the terminal. The network device may generate the M pieces of cell bandwidth part (bandwidth part, BWP) configuration information based on the wireless communication capability information of the terminal. The network device may send the M pieces of cell BWP configuration information to the terminal by using at least one RRC message.

The wireless communication capability information of the terminal may indicate at least one of (I) to (IV) indicated by the wireless communication capability information of the terminal in the embodiment corresponding to FIG. 1. For example, the wireless communication capability information of the terminal may further indicate a maximum quantity X of BWPs that may be simultaneously configured for the terminal and/or a maximum quantity Y of BWPs that may be simultaneously activated for the terminal, where X and Y are positive integers. The maximum quantity of BWPs that may be simultaneously configured and/or the maximum quantity of BWPs that may be simultaneously activated may be at a frequency band granularity (that is, for each frequency band, there is correspondingly a maximum quantity of BWPs that may be simultaneously configured in the frequency band and/or a maximum quantity of BWPs that may be simultaneously activated in the frequency band), may be at a frequency band combination granularity (that is, for each frequency band combination, there is correspondingly a maximum quantity of BWPs that may be simultaneously configured in the frequency band combination and/or a maximum quantity of BWPs that may be simultaneously activated in the frequency band combination), or may be at a terminal granularity (that is, for each terminal, there is correspondingly a maximum quantity of BWPs that may be simultaneously configured for the terminal and/or a maximum quantity of BWPs that may be simultaneously activated for the terminal). Further, the wireless communication capability information of the terminal may further indicate a maximum quantity of cells that may be simultaneously configured for the terminal and/or a maximum quantity of cells that may be simultaneously activated for the terminal. The maximum quantity of cells that may be simultaneously configured and/or the maximum quantity of cells that may be simultaneously activated may be at the frequency band granularity, at the frequency band combination granularity, or at the terminal granularity.

The network device may configure at least one cell BWP for the terminal by using the M pieces of cell BWP configuration information.

One carrier may include at least one BWP. Therefore, the BWP may also be referred to as a carrier bandwidth part (carrier bandwidth part). The BWP may be a segment of contiguous resources in frequency domain. One BWP may include a frequency domain resource on which at least one subcarrier is located. Alternatively, one BWP may include a frequency domain resource on which at least one resource block (resource block, RB) is located. One RB includes a positive integer of subcarriers, for example, 12 subcarriers. A subcarrier spacing (subcarrier spacing, SCS) of the RB may be 15 kHz, 30 kHz, 60 kHz, 120 kHz, 240 kHz, 480 kHz, or another value, for example, an integer multiple of two. Alternatively, one BWP may include a frequency domain resource on which at least one resource block group (resource block group, RBG) is located. One RBG includes at least one RB.

In an implementation, the BWP includes a downlink BWP or an uplink BWP. The uplink BWP is used by the terminal to send a signal to the network device, and the downlink BWP is used by the network device to send a signal to the terminal. A wireless communication capability of the terminal in the uplink BWP and a wireless communication capability of the terminal in the downlink BWP may be separately configured. In another implementation, a configured BWP includes an uplink configured BWP and a downlink configured BWP. A wireless communication capability of the terminal in the uplink BWP and a wireless communication capability of the terminal in the downlink BWP may be configured together. In this application, "the downlink BWP and/or the uplink BWP" are/is collectively referred to as a "BWP". Whether the "BWP" is the uplink BWP and/or the downlink BWP may be determined with reference to a specific embodiment. Because there is a correspondence between a carrier and a cell, a BWP on the carrier may also be referred to as a BWP in the cell corresponding to the carrier, and may be further referred to as a BWP of the cell for short.

In one cell, the network device may configure at least one BWP for the terminal. The at least one BWP (the at least one BWP may be respectively located in different cells) configured by the network device for the terminal may be referred to as a configured BWP of the terminal. The configured BWP of the terminal may include an initial BWP (Initial BWP) and a dedicated BWP (Dedicated BWP). The initial BWP is mainly for signal transmission performed during initial access of the terminal, and the dedicated BWP is mainly for signal transmission performed after the terminal is in an RRC connected state. The configured BWP of the terminal may include a dormant BWP (dormant BWP). For a definition of the dormant BWP, refer to the dormant BWP in the 3GPP standard protocol TS 38.331 (for example, version v16.1.0). Simply speaking, in the dormant BWP, the terminal does not monitor a PDCCH of a secondary cell (secondary cell, SCell) or does not monitor a PDCCH in an SCell, but may continue to perform channel state information (channel state information, CSI) measurement, automatic gain control (automatic gain control, AGC), beam management (beam management), or the like. The network device usually does not configure the dormant BWP for the terminal in a special cell (special cell, SpCell) or an SCell in which there is a PUCCH. The SpCell includes a PCell and a primary secondary cell (primary secondary cell, PSCell).

In this application, dormant BWPs may also be classified into an uplink dormant BWP and a downlink dormant BWP. In the uplink dormant BWP, the terminal does not send an uplink signal, or the terminal sends only an SRS, a physical random access channel (physical random access channel, PRACH), or a TRS. Alternatively, the terminal may continue to perform AGC, beam management, or the like. In the downlink dormant BWP, the terminal does not monitor the PDCCH that is for downlink scheduling and that is of the SCell or does not monitor the PDCCH for downlink scheduling in the SCell, but may continue to perform CSI measurement, AGC, beam management, or the like. In this application, the uplink dormant BWP and the downlink dormant BWP are collectively referred to as the "dormant BWP". Whether the "dormant BWP" is the uplink dormant BWP and/or the downlink dormant BWP may be determined with reference to a specific embodiment.

There is an activated BWP of the terminal in a cell in an activated state (which may also be referred to as an activated cell of the terminal), and the terminal may communicate with the network device by using the activated BWP in the activated cell. There is no activated BWP of the terminal in a cell in a deactivated state (which may also be referred to as a deactivated cell of the terminal).

In one cell, the network device may activate only one of configured BWPs of the terminal, and the BWP may be referred to as the activated BWP of the terminal. Correspondingly, a BWP other than the activated BWP of the terminal in the configured BWPs of the terminal may be referred to as a deactivated BWP of the terminal. The terminal and the network device may perform signal transmission in only the activated BWP. For example, the terminal sends, to the network device in only an activated uplink BWP, a signal carried in a PUCCH and/or a signal carried in a PUSCH. The network device sends, to the terminal in only an activated downlink BWP, a signal carried on a PDCCH and/or a signal carried on a PDSCH. The activated BWP of the terminal may include the dormant BWP.

The M pieces of cell BWP configuration information may correspond to z cells, where z is a positive integer. When z is less than M, it indicates that a specific cell corresponds to a plurality of pieces of cell BWP configuration information. The z cells belong to a frequency band in at least one frequency band combination that can be supported by the terminal. If the wireless communication capability information of the terminal indicates the maximum quantity Z, at the terminal granularity, of cells that may be simultaneously configured, z is a positive integer not greater than Z.

In an implementation of this embodiment of this application, when the z cells belong to the frequency band in the frequency band combination (which may be referred to as a third frequency band combination) that can be supported by the terminal, for the cases (II) to (IV) of the wireless communication capability information of the terminal, the M pieces of cell BWP configuration information respectively satisfy the following: (II) When the z cells are located in one frequency band in the third frequency band combination, a sum of wireless communication capabilities that need to be supported by the terminal in the z cells and that are indicated by largest capability parameters of the z cells may exceed a wireless communication capability that can be supported by the terminal in the frequency band. In this embodiment of this application, a largest capability parameter of a specific cell is a largest capability parameter in at least one capability parameter included in at least one piece of cell BWP configuration information corresponding to the cell. When the z cells are located in different frequency bands in the third frequency band combination, for T (T is a positive integer) cells that are in the z cells and that belong to a same frequency band (which may be referred to as a first frequency band) in the third frequency band combination, a sum of wireless communication capabilities that need to be supported by the terminal in the T cells and that are indicated by largest capability parameters of the T cells may exceed a wireless communication capability that can be supported by the terminal in the first frequency band. (III) The sum of the wireless communication capabilities that need to be supported by the terminal in the z cells and that are indicated by the largest capability parameters of the z cells may exceed a wireless communication capability that can be supported by the terminal in the third frequency band combination. (IV) The sum of the wireless communication capabilities that need to be supported by the terminal in the z cells and that are indicated by the largest capability parameters of the z cells may exceed a wireless communication capability that can be supported by the terminal.

(I) to (IV) that respectively need to be satisfied by the M pieces of cell BWP configuration information may be understood as a configuration constraint that needs to be followed when the network device configures wireless communication capabilities that need to be supported by the terminal in BWPs in the z cells.

A correspondence between cell BWP configuration information and a cell may be reflected in that the cell BWP configuration information includes cell identification information (information that identifies the cell, a cell identity for short) of the cell, or may be reflected in that the cell BWP configuration information needs to be sent by the network device through the cell. Each of the M pieces of cell BWP configuration information includes at least information (for example, a BWP identifier) about a BWP in a cell corresponding to the cell BWP configuration information and a capability parameter of the BWP. The capability parameter of the BWP indicates a wireless communication capability that needs to be supported by the terminal in the BWP. The information about the BWP may include information about an uplink BWP and/or information about a downlink BWP. The cell BWP configuration information may further include more configuration information of the cell or the BWP of the cell, for example, a cell identity and radio resource configuration information of the cell. That is, the cell BWP configuration information may alternatively be represented as {BWP information, capability parameter, ...}. In this application, the cell BWP configuration information may be simply represented as {BWP information, capability parameter}, but this does not mean that the cell BWP configuration information includes only the two elements. As long as two pieces of cell BWP configuration information include different element values, the two pieces of cell BWP configuration information are different. Cells corresponding to two specific pieces of cell BWP configuration information in the M pieces of cell BWP configuration information may be the same. In this case, it is equivalent to that one cell may include BWPs of a plurality of terminals. Capability parameters of different BWPs of a same cell or capability parameters of different BWPs of different cells may be the same or different. Assuming that the M pieces of cell BWP configuration information include x different BWPs, and the wireless communication capability information of the terminal indicates the maximum quantity X, at the terminal granularity, of BWPs that may be simultaneously configured, x is a positive integer not greater than X.

There may be r pieces of cell BWP configuration information corresponding to a first cell (which may be referred to as cell BWP configuration information of the first cell), where r is a positive integer. If the wireless communication capability information of the terminal indicates the maximum quantity X, at a cell granularity, of BWPs that may be simultaneously configured, r is a positive integer not greater than X. The first cell is any one of the z cells. When r=M, it may be understood as that the M pieces of cell BWP configuration information correspond to the first cell, that is, are all the cell BWP configuration information of the first cell. In an implementation, the network device may send, in the first cell, the cell BWP configuration information of the first cell. In this case, the cell BWP configuration information of the first cell may include a cell identity of the first cell, or may not include the cell identity of the first cell. In another implementation, the network device may send the cell BWP configuration information of the first cell in any cell. In this case, the cell BWP configuration information of the first cell may include a cell identity of the first cell.

For the cases (I) to (IV) of the wireless communication capability information of the terminal, the r pieces of cell BWP configuration information respectively need to satisfy the following: (I) A wireless communication capability that needs to be supported by the terminal in a cell BWP of the first cell and that is indicated by a capability parameter included in any cell BWP configuration information of the first cell does not exceed a largest value in wireless communication capabilities that can be supported by the terminal on a carrier corresponding to the first cell. (II) The wireless communication capability that needs to be supported by the terminal in the cell BWP of the first cell and that is indicated by the capability parameter included in the any cell BWP configuration information of the first cell does not exceed a largest value in wireless communication capabilities that can be supported by the terminal in a frequency band to which the first cell belongs. (III) The wireless communication capability that needs to be supported by the terminal in the cell BWP of the first cell and that is indicated by the capability parameter included in the any cell BWP configuration information of the first cell does not exceed a largest value in wireless communication capabilities that can be supported by the terminal in frequency band combinations including the frequency band to which the first cell belongs. (IV) The wireless communication capability that needs to be supported by the terminal in the cell BWP of the first cell and that is indicated by the capability parameter included in the any cell BWP configuration information of the first cell does not exceed the wireless communication capability that can be supported by the terminal.

(I) to (IV) that respectively need to be satisfied by the r pieces of cell BWP configuration information may be understood as a configuration constraint that needs to be followed when the network device configures the wireless communication capability that needs to be supported by the terminal in the BWP in the first cell.

Each of the r pieces of cell BWP configuration information may have identification information, for example, a configuration index. Configuration indexes of cell BWP configuration information corresponding to different cells may be independently or uniformly numbered. When the configuration indexes are independently numbered, numbers thereof may be expressed in a binary manner. For example, a positive integer, greater than or equal to log₂^{(r)}, of bits are needed to indicate numbers of the r pieces of cell BWP configuration information. When the configuration indexes are uniformly numbered, numbers thereof may also be expressed in a binary manner. A positive integer, greater than or equal to log₂^{(M)}, of bits are needed to indicate numbers of the M pieces of cell BWP configuration information. At least one cell BWP configuration information set of the r pieces of cell BWP configuration information may have identification information, for example, a set index. Set indexes of different cell BWP configuration information sets may be independently or uniformly numbered.

S302: The network device sends third indication information to the terminal.

The third indication information indicates N of the M pieces of cell BWP configuration information, where N is a positive integer. For example, the third indication information includes an indication of first cell BWP configuration information. The first cell BWP configuration information is one of the N pieces of cell BWP configuration information.

The N pieces of cell BWP configuration information may correspond to N cells. If the wireless communication capability information of the terminal indicates the maximum quantity R, at the terminal granularity, of cells that may be simultaneously activated, N is a positive integer not greater than R. At least one frequency band to which the N cells belong may belong to a first frequency band combination that can be supported by the terminal. The first frequency band combination may include only the at least one frequency band to which the N cells belong. Alternatively, the first frequency band combination may include not only the at least one frequency band to which the N cells belong, but also another frequency band.

The N pieces of cell BWP configuration information include information about N BWPs and wireless communication capabilities that need to be respectively supported by the terminal in the N BWPs. Because the N BWPs respectively belong to the N cells, carriers corresponding to the N BWPs are carriers corresponding to the N cells, and frequency bands to which the N BWPs belong are frequency bands to which the N cells belong. The wireless communication capabilities that need to be respectively supported by the terminal in the N BWPs may alternatively be understood as wireless communication capabilities that need to be respectively supported by the terminal in the N cells.

The N pieces of cell BWP configuration information include capability parameters of the N cell BWPs. Correspondingly, the terminal determines, as the wireless communication capabilities that respectively need to be supported by the terminal in the N BWPs, wireless communication capabilities that respectively need to be supported by the terminal in the N cell BWPs and that are indicated by the capability parameters of the N cell BWPs. When M=r, and N=1, it may be understood as that the third indication information indicates the first cell BWP configuration information, where the first cell BWP configuration information is one of the r pieces of cell BWP configuration information of the first cell. The first cell BWP configuration information includes a first capability parameter of a first cell BWP. Correspondingly, the terminal determines, as a wireless communication capability that needs to be supported by the terminal in the BWP, a wireless communication capability that needs to be supported by the terminal in the first cell BWP and that is indicated by the first capability parameter.

For the cases (I) to (IV) of the wireless communication capability information of the terminal, the N pieces of cell BWP configuration information respectively need to satisfy the following: (I) A wireless communication capability that needs to be supported by the terminal in any one of the N BWPs does not exceed a wireless communication capability that can be supported by the terminal on a carrier corresponding to the any BWP in the first frequency band combination; (II) the wireless communication capability that needs to be supported by the terminal in the any one of the N BWPs does not exceed a wireless communication capability that can be supported by the terminal in a frequency band to which the any BWP belongs in the first frequency band combination; (III) a sum of the wireless communication capabilities that need to be supported by the terminal in the N BWPs does not exceed a wireless communication capability that can be supported by the terminal in the first frequency band combination; and (IV) the sum of the wireless communication capabilities that need to be supported by the terminal in the N BWPs does not exceed the wireless communication capability that can be supported by the terminal.

In the case (II) that needs to be satisfied by the N pieces of cell BWP configuration information, for T (T is a positive integer) BWPs that are in the N BWPs and that belong to a same frequency band in the first frequency band combination, T pieces of cell BWP configuration information corresponding to the T BWPs need to satisfy that a sum of wireless communication capabilities that need to be supported by the terminal in the T BWPs does not exceed a wireless communication capability that can be supported by the terminal in the frequency band to which the T BWPs belong in the first frequency band combination. Optionally, for the T BWPs, whether a wireless communication capability that needs to be supported by the terminal in any one of the T BWPs exceeds a wireless communication capability that can be supported by the terminal in the frequency band to which the any BWP belongs in the first frequency band combination may not need to be considered. T is a positive integer less than or equal to N. When T is equal to N, it may be understood as that the N BWPs belong to a same frequency band in the first frequency band combination that can be supported by the terminal. When T is equal to 1, it may be understood as that the N BWPs respectively belong to different frequency bands in the first frequency band combination that can be supported by the terminal.

(I) to (IV) that respectively need to be satisfied by the N pieces of cell BWP configuration information may be understood as a configuration constraint that needs to be followed when the network device determines the wireless communication capabilities that need to be supported by the terminal in the N cells.

When an uplink wireless communication capability and a downlink wireless communication capability are coupled, (I) to (IV) that need to be satisfied by the N pieces of cell BWP configuration information may be replaced with the following: (I) A sum of an uplink wireless communication capability and a downlink wireless communication capability that need to be supported by the terminal in the any one of the N BWPs does not exceed the wireless communication capability that can be supported by the terminal on the carrier corresponding to the any BWP in the first frequency band combination; (II) the sum of the uplink wireless communication capability and the downlink wireless communication capability that need to be supported by the terminal in the any one of the N BWPs does not exceed the wireless communication capability that can be supported by the terminal in the frequency band to which the any BWP belongs in the first frequency band combination; (III) a sum of uplink wireless communication capabilities and downlink wireless communication capabilities that need to be supported by the terminal in the N BWPs does not exceed the wireless communication capability that can be supported by the terminal in the first frequency band combination; and (IV) the sum of the uplink wireless communication capabilities and the downlink wireless communication capabilities that need to be supported by the terminal in the N BWPs does not exceed the wireless communication capability that can be supported by the terminal. The sum of the uplink wireless communication capability and the downlink wireless communication capability that need to be supported by the terminal in the any BWP may be understood as a sum of an uplink wireless communication capability that needs to be supported by the terminal in an uplink BWP included in the BWP and a downlink wireless communication capability that needs to be supported by the terminal in a downlink BWP included in the BWP.

When the uplink wireless communication capability and the downlink wireless communication capability are decoupled, (I) to (IV) that need to be satisfied by the N pieces of cell BWP configuration information may be replaced with the following: (I) An uplink wireless communication capability that needs to be supported by the terminal in any uplink BWP in the N BWPs does not exceed an uplink wireless communication capability that can be supported by the terminal on a carrier corresponding to the any uplink BWP in the first frequency band combination, and a downlink wireless communication capability that needs to be supported by the terminal in any downlink BWP in the N BWPs does not exceed a downlink wireless communication capability that can be supported by the terminal on a carrier corresponding to the any downlink BWP in the first frequency band combination; (II) the uplink wireless communication capability that needs to be supported by the terminal in the any uplink BWP in the N BWPs does not exceed an uplink wireless communication capability that can be supported by the terminal in a frequency band to which the any BWP belongs in the first frequency band combination, and the downlink wireless communication capability that needs to be supported by the terminal in the any downlink BWP in the N BWPs does not exceed a downlink wireless communication capability that can be supported by the terminal in a frequency band to which the any downlink BWP belongs in the first frequency band combination; (III) a sum of the uplink wireless communication capabilities that need to be supported by the terminal in the N BWPs does not exceed an uplink wireless communication capability that can be supported by the terminal in the first frequency band combination, and a sum of the downlink wireless communication capabilities that need to be supported by the terminal in the N BWPs does not exceed a downlink wireless communication capability that can be supported by the terminal in the first frequency band combination; and (IV) the uplink wireless communication capabilities that need to be supported by the terminal in the N BWPs do not exceed an uplink wireless communication capability that can be supported by the terminal, and the downlink wireless communication capabilities that need to be supported by the terminal in the N BWPs do not exceed a downlink wireless communication capability that can be supported by the terminal. The uplink wireless communication capabilities that need to be supported by the terminal in the N BWPs may be understood as a sum of uplink wireless communication capabilities that need to be supported by the terminal in all uplink BWPs included in the N BWPs. The downlink wireless communication capabilities that need to be supported by the terminal in the N BWPs may be understood as a sum of uplink wireless communication capabilities that need to be supported by the terminal in all downlink BWPs included in the N BWPs.

For an implementation of the third indication information, refer to the implementation of the first indication information in the method 200. The third indication information may be carried in one indication message (for example, a MAC CE or DCI), or may be carried in a plurality of indication messages (for example, MAC CEs or DCI).

The following provides descriptions by using an example in which the third indication information may be carried in the plurality of indication messages. For a case in which the third indication information may be carried in one indication message, refer to the implementation of the first indication information in the method 200. Details are not described herein again. For example, the third indication information may be carried in N indication messages. In this case, each indication message includes identification information of one piece of cell BWP configuration information (for example, configuration indexes of the N pieces of cell BWP configuration information). Sending manners or sending time points of the N indication messages may be the same or different. Cells corresponding to cell BWP configuration information indicated by all indication messages may be different from each other. For example, the network device may send a first indication message to the terminal. The first indication message indicates the first cell BWP configuration information. The first cell BWP configuration information is any one of the M pieces of cell BWP configuration information. The first cell BWP configuration information corresponds to the first cell. The first indication message is any one of the N indication messages. For example, each indication message may be sent by the network device to the terminal in a cell corresponding to the cell BWP configuration information indicated by the indication message. For example, the network device may send the first indication message in the first cell.

The N indication messages may be specifically N BWP activation indication messages or BWP switching indication messages. The BWP switching indication information indicates the terminal to switch from a BWP X to a BWP Y. The BWP X is a BWP that is currently in the activated state, and the BWP Y is a BWP that needs to be activated. The BWP X may be referred to as a source BWP. The BWP Y may be referred to as a target BWP. The BWP switching indication may include identification information of the target BWP. The BWP switching indication indicates that the target BWP needs to be activated, to indicate the cell BWP configuration information that includes information about the target BWP and that is in S301. The BWP switching indication further indicates that the source BWP needs to be deactivated (deactivated).

When the third indication information is sent via the plurality of indication messages, each of the M pieces of cell BWP configuration information in S301 may include a cell identity of the cell corresponding to the cell BWP configuration information. For example, because the first indication message is sent in the first cell, the first cell BWP configuration information may not need to include the cell identity of the first cell.

Optionally, the method 300 may further include S303. S303: The network device sends fourth indication information to the terminal.

For example, if the case in which the wireless communication capability that needs to be supported by the terminal in the at least one cell needs to be adjusted in the embodiment corresponding to FIG. 1 occurs, the network device may send the fourth indication information to the terminal.

The fourth indication information indicates Q of the M pieces of cell BWP configuration information, where Q is a positive integer. The Q pieces of cell BWP configuration information are not completely the same as the N pieces of cell BWP configuration information indicated by the third indication information. That is, the Q pieces of cell BWP configuration information and the N pieces of cell BWP configuration information may have same cell BWP configuration information, or may have no same cell BWP configuration information. In this way, the wireless communication capability that needs to be supported by the terminal in the at least one cell can be adjusted.

The Q pieces of cell BWP configuration information include capability parameters of Q cell BWPs. Correspondingly, the terminal determines, as wireless communication capabilities that respectively need to be supported by the terminal in the Q BWPs, the capability parameters of the Q cell BWPs. When M=r, and Q=1, it may be understood as that the fourth indication information indicates second cell BWP configuration information, the second cell BWP configuration information is one of the r pieces of cell BWP configuration information of the first cell, and the second cell BWP configuration information is different from the first cell BWP configuration information. The second cell BWP configuration information includes a second capability parameter of a second cell BWP. Correspondingly, the terminal determines, as a wireless communication capability that needs to be supported by the terminal in the BWP, a wireless communication capability that needs to be supported by the terminal in the second cell BWP and that is indicated by the second capability parameter.

For the fourth indication information and a relationship between the fourth indication information and the third indication information, refer to the second indication information in the method 200 and the relationship between the second indication information and the first indication information in the method 200. Details are not described herein again.

When the third indication information or the fourth indication information indicates a specific piece of cell BWP configuration information, a wireless communication capability that needs to be supported by the terminal in a BWP corresponding to BWP information included in the cell BWP configuration information is set to a capability parameter included in the cell BWP configuration information. In addition, the BWP corresponding to the BWP information included in the cell BWP configuration information may be activated based on the third indication information or the fourth indication information. Optionally, the BWP corresponding to the BWP information included in the cell BWP configuration information may alternatively be additionally activated by using an additional message (for example, a MAC CE or DCI). In addition, the terminal determines that a BWP other than the BWP corresponding to the BWP information included in the cell BWP configuration information indicated by the third indication information or the fourth indication information needs to be deactivated (deactivated). Optionally, the network device may alternatively additionally deactivate (deactivate), by using an additional message (for example, a MAC CE or DCI), the BWP other than the BWP corresponding to the BWP information included in the cell BWP configuration information indicated by the third indication information or the fourth indication information.

The following describes the communication method 300 by using a specific example.

An example in which a quantity of PDSCHs that can be simultaneously processed is the wireless communication capability of the terminal is used. The wireless communication capability information of the terminal may be represented as {band A: two PDSCHs} and {band A: one PDSCH; band B: one PDSCH}.

The network device sends four pieces of cell BWP configuration information to the terminal: cell BWP configuration information 1: {cell identity 1, BWP 1, quantity of PDSCHs is one}; cell BWP configuration information 2: {cell identity 1, BWP 2, quantity of PDSCHs is two}; cell BWP configuration information 3: {cell identity 2, BWP 1, quantity of PDSCHs is one}; and cell BWP configuration information 4: {cell identity 2, BWP 2, quantity of PDSCHs is zero} or {cell identity 2, BWP 2}. The cell identity 1 is an identity of a cell 1 located in the band A, and the cell identity 2 is an identity of a cell 2 located in the band B. A carrier corresponding to the cell 1 may be a carrier 1 (CC 1). A carrier corresponding to the cell 1 may be a carrier 2 (CC 2). The BWP 2 of the cell 2 may be a specially defined BWP. The network device does not send a PDCCH or a PDSCH in the special BWP, and the terminal does not monitor the PDCCH for the special BWP. When the special BWP is activated, the terminal may not need to support the wireless communication capability in the special BWP. The BWP 2 of the cell 2 may alternatively be a dormant BWP.

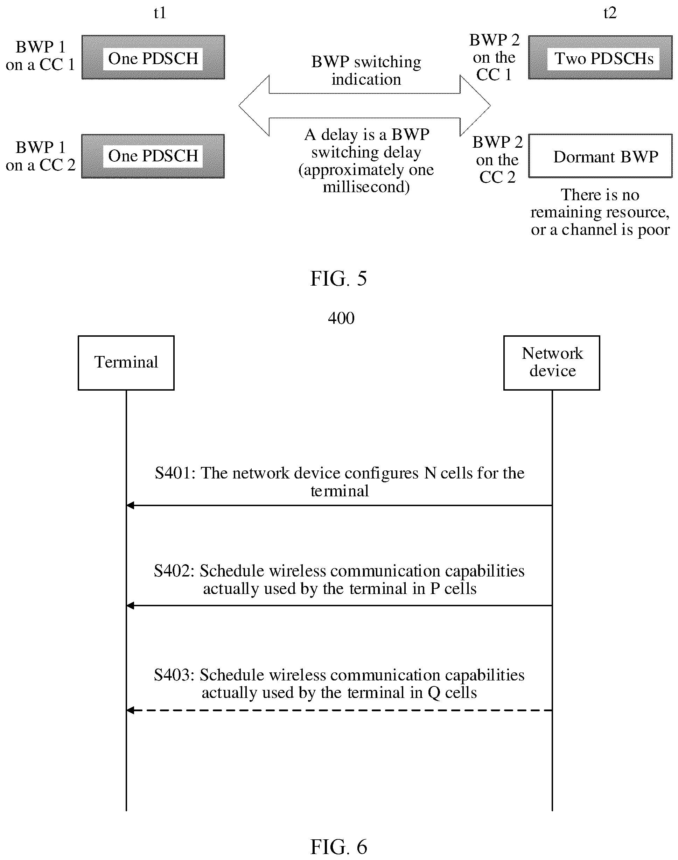

As shown in FIG. 5, at a moment t1, the network device may send the third indication information to the terminal. The third indication information may indicate the cell BWP configuration information 1 and the cell BWP configuration information 3 (for example, both the BWP 1 of the cell 1 and the BWP 1 of the cell 2 have available bandwidth, and channel quality satisfies a communication requirement), that is, indicate to set a quantity of PDSCHs that need to be capable of being simultaneously processed by the terminal in the BWP 1 of the cell 1 to one and set a quantity of PDSCHs that need to be capable of being simultaneously processed by the terminal in the BWP 1 of the cell 2 to one. The BWP 1 of the cell 1 and the BWP 1 of the cell 2 may be activated based on the third indication information. Optionally, the BWP 1 of the cell 1 and the BWP 1 of the cell 2 may alternatively be activated by using an additional message (for example, a MAC CE or DCI).

The third indication information may be carried in one indication message. The indication message may include identification information of a cell BWP configuration information set of the cell BWP configuration information 1 and the cell BWP configuration information 3. The indication message may alternatively include identification information of the cell BWP configuration information 1 and identification information of the cell BWP configuration information 3. The indication message may alternatively include a bitmap: 1010, indicating to make the cell BWP configuration information 1 corresponding to a first bit and the cell BWP configuration information 3 corresponding to a third bit take effect. The indication message may be sent by the network device to the terminal in any activated cell. Optionally, the third indication information may be carried in two indication messages. In the two indication messages, an indication message 1 indicates the cell BWP configuration information 1, and the indication message 1 is sent by the network device to the terminal in the cell 1; and an indication message 2 indicates the cell BWP configuration information 3, and the indication message 2 is sent by the network device to the terminal in the cell 2. The indication message 1 may include the identification information of the cell BWP configuration information 1, and the indication message 2 may include the identification information of the cell BWP configuration information 3. In a possible implementation, because the indication message 1 is sent in the cell 1, the indication message 1 may not need to include the cell identity of the cell 1. Because the indication message 2 is sent in the cell 2, the indication message 2 may not need to include the cell identity of the cell 2. For example, the indication message 1 may be a BWP switching indication message 1. The indication message 2 may be a BWP switching indication message 2. The BWP switching indication message 1 indicates the terminal to switch to the BWP 1. The BWP switching indication message 2 indicates the terminal to switch to the BWP 2.

As shown in FIG. 5, if the case in which the wireless communication capability that needs to be supported by the terminal in the at least one cell needs to be adjusted occurs (for example, the network device considers that no remaining resource is allocated to the terminal in the BWP 1 of the cell 2, or channel quality is poor), the network device may send the fourth indication information to the terminal at a moment t2. The fourth indication information may indicate the cell BWP configuration information 2 and the cell BWP configuration information 4, that is, indicate to configure a quantity of PDSCHs that need to be capable of being simultaneously processed by the terminal in the BWP 2 of the cell 1 to two and configure a quantity of PDSCHs that need to be capable of being simultaneously processed by the terminal in the BWP 2 of the cell 2 to zero. The BWP 2 of the cell 1 and the BWP 2 of the cell 2 may be activated based on the fourth indication information. Optionally, the BWP 2 of the cell 1 and the BWP 2 of the cell 2 may alternatively be activated by using an additional message (for example, a MAC CE or DCI). The BWP 1 of the cell 1 and the BWP 1 of the cell 2 may be determined, based on that the cell BWP configuration information indicated by the fourth indication information does not include information about the BWP 1 of the cell 1 and information about the BWP 1 of the cell 2, to need to be deactivated (deactivated). Optionally, the BWP 1 of the cell 1 and the BWP 1 of the cell 2 may be deactivated (deactivated) by using an additional message (for example, a MAC CE or DCI).

For example, the fourth indication information may include two BWP switching indications, and the two BWP switching indications respectively indicate that the BWP 2 of the cell 1 and the BWP 2 of the cell 2 need to be activated. The two BWP switching indications may further respectively indicate that the BWP 1 of the cell 1 and the BWP 1 of the cell 2 need to be deactivated. The two BWP switching indications may respectively include an identifier of a BWP 2 of the cell 1 and an identifier of the BWP 2 of the cell 2. In this way, according to the method 300, a delay in adjusting, by the network device, the wireless communication capability that needs to be supported by the terminal in the at least one cell may be enabled to be approximately equivalent to a cell BWP switching delay, for example, approximately one millisecond (ms).

According to the method 300, because the terminal does not need to support a quantity of PDSCHs in the BWP 2 of the cell 2, that is, in the special BWP or the dormant BWP, a quantity of PDSCHs that can be supported by the terminal can all be used in the BWP 2 of the cell 1. Therefore, when the quantity of PDSCHs that can be simultaneously processed by the terminal remains unchanged, a wireless communication capability between the cell 1 and the terminal is enhanced, and the wireless communication capability of the terminal is fully used.

If the third indication information or the fourth indication information is carried in one indication message, and is sent in the cell 1, the cell BWP configuration information 1 and the cell BWP configuration information 2 may not need to include the cell identity of the cell 1. If the third indication information or the fourth indication information is carried in two indication messages, and is separately sent in the cell 1 and the cell 2, the cell BWP configuration information 1 and the cell BWP configuration information 2 may not need to include the cell identity of the cell 1, and the cell BWP configuration information 3 and the cell BWP configuration information 4 may not need to include the cell identity of the cell 2.

When the wireless communication capability that needs to be supported by the terminal in the at least one cell is adjusted, cell releasing may not need to be performed. In addition, when the third indication information or the fourth indication information is a MAC CE or DCI, the delay in adjusting the wireless communication capability that needs to be supported by the terminal in the at least one cell is also shorter (for example, several milliseconds). Therefore, a speed of adjusting the wireless communication capability that needs to be supported by the terminal in the at least one cell is faster, so that a change of a wireless communication environment between the network device and the terminal can be more quickly adapted, and the wireless communication capability of the terminal and network resource utilization are improved.

In this application, the wireless communication capability that needs to be supported by the terminal in the cell does not represent a wireless communication capability actually used by the terminal in the cell during actual communication. The wireless communication capability actually used by the terminal in the cell during the actual communication depends on an actual communication requirement or actual scheduling of the network device. The network device may schedule, by using a MAC CE or DCI, the wireless communication capability actually used by the terminal in the cell. The wireless communication capability that is actually used by the terminal in the cell and that is scheduled by the network device cannot exceed the wireless communication capability that needs to be supported by the terminal in the cell. For example, if it is configured that the terminal does not need to support an s-DCI m-TRP or m-DCI m-TRP feature in the cell, the network device cannot schedule the s-DCI m-TRP or m-DCI m-TRP feature in the cell. For another example, if it is configured that the terminal needs to be capable of simultaneously processing four PDSCHs in the cell, the network device cannot schedule five PDSCHs in the cell.

In an embodiment of this application, when adjusting a wireless communication capability actually used by the terminal in the at least one cell, the network device may only need to ensure that the wireless communication capability actually used by the terminal in the at least one scheduled cell does not exceed the wireless communication capability of the terminal. In other words, only a capability parameter that needs to be supported by the terminal in the scheduled cell occupies or is calculated into the wireless communication capability of the terminal. This further improves flexibility of adjusting the wireless communication capability that needs to be supported by the terminal in the at least one cell.

Refer to a diagram of a communication method 400 provided in FIG. 6. The communication method 400 specifically includes the following steps.

S401: A network device configures N cells for a terminal, where N is a positive integer.

The network device may receive wireless communication capability information from the terminal. The wireless communication capability information of the terminal may indicate at least one of (I) to (IV) indicated by the wireless communication capability information of the terminal in the embodiment corresponding to FIG. 1.

For example, the wireless communication capability information of the terminal may further indicate at least one of the following: (I) at least one of a carrier set of carriers between which the wireless communication capability of the terminal may be switched, a quantity of wireless communication capabilities that are of the terminal and that may be switched between the carriers in the carrier set, and a delay in switching the wireless communication capability of the terminal between the carriers in the carrier set, where a unit of the delay may be microsecond (µs) or millisecond (ms); (II) a frequency band combination of frequency bands between which the wireless communication capability of the terminal may be switched, a quantity of wireless communication capabilities that are of the terminal and that may be switched between the frequency bands in the frequency band combination, or a delay in switching the wireless communication capability of the terminal between the frequency bands in the frequency band combination; and (III) a set of frequency band combinations between which the wireless communication capability of the terminal may be switched, a quantity of wireless communication capabilities that are of the terminal and that may be switched between the frequency band combinations in the set, or a delay in switching the wireless communication capability of the terminal between the frequency band combinations in the set.

The following describes, by using an implementation (1) and an implementation (2), a process in which the network device configures wireless communication capabilities that need to be supported by the terminal in the N cells.

Implementation (1): The network device sends M pieces of cell configuration information to the terminal, where M is a positive integer. Each of the M pieces of cell configuration information includes at least a capability parameter of a cell corresponding to the cell configuration information. The capability parameter of the cell corresponding to the cell configuration information indicates a wireless communication capability that needs to be supported by the terminal in the cell corresponding to the cell configuration information.

The network device sends fifth indication information to the terminal, where the fifth indication information indicates N of the M pieces of cell configuration information, and N is a positive integer. The N pieces of cell configuration information correspond to the N cells.

Implementation (2): The network device sends N pieces of cell configuration information to the terminal, where N is a positive integer. The N pieces of cell configuration information correspond to the N cells. Each of the N pieces of cell configuration information includes at least a capability parameter of a cell corresponding to the cell configuration information. The capability parameter of the cell corresponding to the cell configuration information indicates a wireless communication capability that needs to be supported by the terminal in the cell corresponding to the cell configuration information.

S402: The network device schedules wireless communication capabilities actually used by the terminal in P cells, where P is a positive integer.

The P cells are cells in the N cells. The P cells may be in an activated state. The network device may schedule, by using a scheduling message (for example, DCI), the wireless communication capabilities actually used by the terminal in the P cells.

The network device may schedule, by using a plurality of scheduling messages, the wireless communication capabilities actually used by the terminal in the P cells, or may uniformly schedule, by using one scheduling message, the wireless communication capabilities actually used by the terminal in the P cells. This is not limited in this application.

The P cells may belong to P frequency bands in a first frequency band combination that can be supported by the terminal. The first frequency band combination may include only the P frequency bands to which the P cells belong. Alternatively, the first frequency band combination may include not only the P frequency bands to which the P cells belong, but also another frequency band.

For the cases (I) to (IV) of the wireless communication capability information of the terminal in the embodiment corresponding to FIG. 1, the wireless communication capabilities actually used by the terminal in the P cells respectively need to satisfy the following: (I) A wireless communication capability actually used by the terminal in any one of the P cells does not exceed a wireless communication capability that can be supported by the terminal on a carrier corresponding to the any cell in the first frequency band combination; (II) the wireless communication capability actually used by the terminal in the any one of the P cells does not exceed a wireless communication capability that can be supported by the terminal in a frequency band to which the any cell belongs in the first frequency band combination; (III) a sum of the wireless communication capabilities actually used by the terminal in the P cells does not exceed a wireless communication capability that can be supported by the terminal in the first frequency band combination; and (IV) the sum of the wireless communication capabilities actually used by the terminal in the P cells does not exceed a wireless communication capability that can be supported by the terminal.

In the case (II) that needs to be satisfied by the wireless communication capabilities actually used by the terminal in the P cells, for T (T is a positive integer) cells that are in the P cells and that belong to a same frequency band in the first frequency band combination, wireless communication capabilities actually used by the terminal in the T cells need to satisfy that a sum of the wireless communication capabilities actually used by the terminal in the T cells does not exceed a wireless communication capability that can be supported by the terminal in the frequency band to which the T cells belong in the first frequency band combination. Optionally, for the T cells, whether a wireless communication capability actually used by the terminal in any one of the T cells exceeds a wireless communication capability that can be supported by the terminal in the frequency band to which the any cell belongs in the first frequency band combination may not need to be considered.

(I) to (IV) that respectively need to be satisfied by the wireless communication capabilities actually used by the terminal in the P cells may be understood as a configuration constraint that needs to be followed when the network device schedules the wireless communication capabilities actually used by the terminal in the P cells.

When an uplink wireless communication capability and a downlink wireless communication capability are coupled, (I) to (IV) that respectively need to be satisfied by the wireless communication capabilities actually used by the terminal in the P cells may be replaced with the following: (I) A sum of an uplink wireless communication capability and a downlink wireless communication capability actually used by the terminal in the any one of the P cells does not exceed the wireless communication capability that can be supported by the terminal on the carrier corresponding to the any cell in the first frequency band combination; (II) the sum of the uplink wireless communication capability and the downlink wireless communication capability actually used by the terminal in the any one of the P cells does not exceed the wireless communication capability that can be supported by the terminal in the frequency band to which the any cell belongs in the first frequency band combination; (III) a sum of uplink wireless communication capabilities and downlink wireless communication capabilities actually used by the terminal in the P cells does not exceed the wireless communication capability that can be supported by the terminal in the first frequency band combination; and (IV) the sum of the uplink wireless communication capabilities and the downlink wireless communication capabilities actually used by the terminal in the P cells does not exceed the wireless communication capability that can be supported by the terminal.

When an uplink wireless communication capability and a downlink wireless communication capability are decoupled, (I) to (IV) that respectively need to be satisfied by the wireless communication capabilities actually used by the terminal in the P cells may be replaced with the following: (I) An uplink wireless communication capability actually used by the terminal in the any one of the P cells does not exceed an uplink wireless communication capability that can be supported by the terminal on the carrier corresponding to the any cell in the first frequency band combination, and a downlink wireless communication capability actually used by the terminal in the any one of the P cells does not exceed a downlink wireless communication capability that can be supported by the terminal on the carrier corresponding to the any cell in the first frequency band combination; (II) the uplink wireless communication capability actually used by the terminal in the any one of the P cells does not exceed an uplink wireless communication capability that can be supported by the terminal in the frequency band to which the any cell belongs in the first frequency band combination, and the downlink wireless communication capability actually used by the terminal in the any one of the P cells does not exceed a downlink wireless communication capability that can be supported by the terminal in the frequency band to which the any cell belongs in the first frequency band combination; (III) a sum of uplink wireless communication capabilities actually used by the terminal in the P cells does not exceed an uplink wireless communication capability that can be supported by the terminal in the first frequency band combination, and a sum of downlink wireless communication capabilities actually used by the terminal in the P cells does not exceed a downlink wireless communication capability that can be supported by the terminal in the first frequency band combination; and (IV) the uplink wireless communication capabilities actually used by the terminal in the P cells do not exceed the uplink wireless communication capability that can be supported by the terminal, and the downlink wireless communication capabilities actually used by the terminal in the P cells do not exceed the downlink wireless communication capability that can be supported by the terminal.

Optionally, the method 400 may further include S403. S403: The network device schedules wireless communication capabilities actually used by the terminal in Q cells, where Q is a positive integer.

For example, if a case in which the wireless communication capabilities that need to be actually used by the terminal in the P cells need to be adjusted occurs, the network device may schedule, by using scheduling information, the wireless communication capabilities actually used by the terminal in the Q cells, to adjust a wireless communication capability actually used by the terminal in at least one cell. The Q cells may respectively belong to different frequency bands in a second frequency band combination that can be supported by the terminal. The second frequency band combination may include only at least one frequency band to which the Q cells belong. Alternatively, the second frequency band combination may include not only at least one frequency band to which the Q cells belong, but also another frequency band. The first frequency band combination and the second frequency band combination may include a same frequency band, that is, are a same frequency band combination. A part of frequency bands in the first frequency band combination and the second frequency band combination may alternatively be different.

Wireless communication capabilities that need to be supported by the terminal in the Q cells respectively need to satisfy the analogy of (I) to (IV) that respectively need to be satisfied by the wireless communication capabilities that need to be supported by the terminal in the P cells in S402. Details are not described herein again.

If the wireless communication capability information of the terminal includes the frequency band combination of the frequency bands between which the wireless communication capability of the terminal may be switched, the frequency bands to which the P cells belong and the frequency bands to which the Q cells belong to the frequency band combination.

If the wireless communication capability information of the terminal includes information about a delay in switching the wireless communication capability of the terminal (for example, the delay in switching the wireless communication capability of the terminal between the frequency bands in the frequency band combination of the frequency bands between which the wireless communication capability of the terminal may be switched), the network device needs to consider the delay when scheduling the wireless communication capabilities actually used by the terminal in the Q cells. For example, a time interval between scheduling, by the network device, the wireless communication capabilities actually used by the terminal in the P cells and scheduling, by the network device, the wireless communication capabilities actually used by the terminal in the Q cells needs to be greater than or equal to the delay, so that the terminal performs switching processing in time.

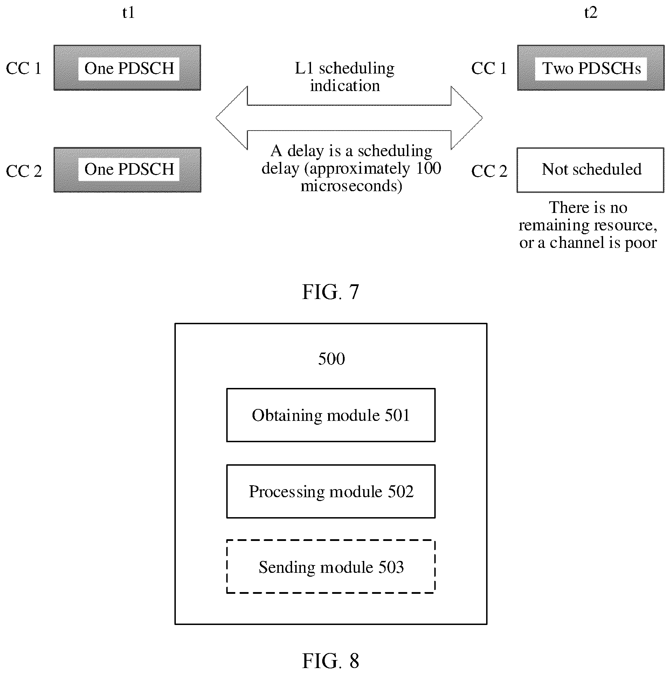

As shown in FIG. 7, an example in which a quantity of PDSCHs that can be simultaneously processed is the wireless communication capability of the terminal is used. At a moment t1, through scheduling, the network device may set a quantity of PDSCHs actually used by the terminal in a cell 1 to one, and set a quantity of PDSCHs actually used by the terminal in a cell 2 to one (for example, in this case, both the cell 1 and the cell 2 have available bandwidth, and channel quality satisfies a communication requirement). A carrier corresponding to the cell 1 may be a carrier 1 (CC 1). A carrier corresponding to the cell 1 may be a carrier 2 (CC 2). If a case in which the wireless communication capability actually used by the terminal in the at least one cell needs to be adjusted occurs (for example, in this case, the network device considers that no downlink resource is allocated to the terminal in the cell 2, or channel quality is poor), at a moment t2, by using an L1 scheduling indication, the network device may reset the quantity of PDSCHs actually used by the terminal in the cell 1 to two, and reset the quantity of PDSCHs actually used by the terminal in the cell 2 to zero (or it is understood as that the terminal is not scheduled to perform transmission in the cell 2 by using a PDSCH). L1 scheduling indication information may include DCI. In this way, according to the method 400, a delay in adjusting, by the network device, a wireless communication capability that needs to be supported by the terminal in the at least one cell may be enabled to be approximately equivalent to an L1 scheduling delay, for example, approximately 100 microseconds (µs). For example, if the delay in switching the wireless communication capability of the terminal is considered, for example, the delay is T, a difference between t1 and t2 needs to be greater than or equal to T.

In an embodiment of this application, a capability parameter that needs to be supported by the terminal in a configured cell does not occupy or is not calculated into the wireless communication capability of the terminal, and a capability parameter that needs to be supported by the terminal in a configured and activated cell does not occupy or is not calculated into the wireless communication capability of the terminal. In this way, a waste of the wireless communication capability of the terminal is reduced, and network resource utilization is improved.

Based on the foregoing similar technical concept, embodiments of this application provide a communication apparatus. The communication apparatus may be the terminal or a chip in the terminal in any possible design solution of the methods in the foregoing embodiments. The communication apparatus includes at least one corresponding unit that is in the communication methods provided in the foregoing embodiments and that is configured to perform the method step, the operation, or the behavior performed by the terminal. The at least one unit may be disposed in one-to-one correspondence with the method step, the operation, or the behavior performed by the terminal. These units may be implemented by using a computer program, may be implemented by using a hardware circuit, or may be implemented by using a computer program in combination with a hardware circuit.

With reference to FIG. 8, the following describes the communication apparatus provided in this application. As shown in FIG. 8, a communication apparatus 500 may be used in a terminal or a chip in the terminal. The following specifically describes a structure and a function of the communication apparatus 500 by using different designs. Although names of modules in different designs are the same, structures and functions may be different.

The communication apparatus 500 may include an obtaining module 501 and a processing module 502. The obtaining module 501 is configured to receive r pieces of cell configuration information of a first cell from a network device, where r is a positive integer, each of the r pieces of cell configuration information includes a capability parameter of the first cell, and the capability parameter of the first cell indicates a wireless communication capability that needs to be supported by the terminal in the first cell. The obtaining module 501 is further configured to receive an indication of first cell configuration information from the network device, where the first cell configuration information is one of the r pieces of cell configuration information, and the first cell configuration information includes a first capability parameter of the first cell. The processing module 502 is configured to determine, as the wireless communication capability that needs to be supported by the terminal in the first cell, a wireless communication capability that needs to be supported by the terminal in the first cell and that is indicated by the first capability parameter.

The communication apparatus 500 may further include a sending module 503. The sending module 503 is configured to send wireless communication capability information of the terminal to the network device, where the wireless communication capability information indicates at least one frequency band combination that is capable of being supported by the terminal and a wireless communication capability that is capable of being supported by the terminal in the at least one frequency band combination.

In an implementation, the obtaining module 501 is specifically used by the terminal to receive M pieces of cell configuration information from the network device, where M is a positive integer, the cell configuration information includes a capability parameter of a cell corresponding to the cell configuration information, and the r pieces of cell configuration information are r of the M pieces of cell configuration information.

In an implementation, the obtaining module 501 is specifically used by the terminal to receive first indication information from the network device, where the first indication information indicates N of the M pieces of cell configuration information, N is a positive integer, the first cell configuration information is one of the N pieces of cell configuration information, and the first indication information includes the indication of the first cell configuration information.

In an implementation, the N pieces of cell configuration information respectively correspond to N cells, and the N pieces of cell configuration information respectively include capability parameters of the N cells. The processing module 502 is specifically configured to determine, as wireless communication capabilities that respectively need to be supported by the terminal in the N cells, wireless communication capabilities that respectively need to be supported by the terminal in the N cells and that are indicated by the capability parameters of the N cells.

In a possible design, the N cells belong to at least one frequency band in a first frequency band combination that is capable of being supported by the terminal, and the N pieces of cell configuration information need to satisfy that a sum of the wireless communication capabilities that respectively need to be supported by the terminal in the N cells and that are indicated by the capability parameters of the N cells does not exceed a wireless communication capability that can be supported by the terminal in the first frequency band combination.

In a possible design, the first frequency band combination includes the frequency band to which the N cells belong and another frequency band.

In a possible design, the cell configuration information further includes status information, the status information indicates that a cell corresponding to the cell configuration information is in an activated state or a deactivated state, and in the N pieces of cell configuration information, there are P pieces of cell configuration information including status information indicating the activated state, where P is a positive integer.

In a possible design, the P pieces of cell configuration information respectively correspond to P cells, and the P pieces of cell configuration information respectively include capability parameters of the P cells. The processing module 502 is specifically configured to determine, as wireless communication capabilities that respectively need to be supported by the terminal in the P cells, wireless communication capabilities that respectively need to be supported by the terminal in the P cells and that are indicated by the capability parameters of the P cells.

In a possible design, the P cells belong to at least one frequency band in a first frequency band combination that is capable of being supported by the terminal, and the P pieces of cell configuration information need to satisfy that a sum of the wireless communication capabilities that respectively need to be supported by the terminal in the P cells and that are indicated by the capability parameters of the P cells does not exceed a wireless communication capability that is capable of being supported by the terminal in the first frequency band combination.

In a possible design, the first frequency band combination includes the frequency band to which the P cells belong and another frequency band.

In an implementation, the obtaining module 501 is specifically configured to receive the r pieces of cell configuration information of the first cell from the network device in the first cell.

In an implementation, the obtaining module 501 is specifically configured to receive the indication of the first cell configuration information from the network device in the first cell.

The wireless communication capability includes at least one of the following: a quantity of physical downlink control channels that are capable of being simultaneously processed, a quantity of control-resource set pools that are capable of being simultaneously processed, a quantity of physical downlink shared channels that are capable of being simultaneously processed, a quantity of physical uplink shared channels that are capable of being simultaneously processed, a quantity of physical uplink control channels that are capable of being simultaneously processed, a quantity of layers that are capable of being simultaneously processed, a quantity of streams that are capable of being simultaneously processed, a quantity of antenna ports that are capable of being simultaneously processed, a quantity of channels that are capable of being simultaneously processed, whether a single downlink control information based multiple transmission reception point feature is supported, or whether a multiple downlink control information based multiple transmission reception point feature is supported.

Based on the foregoing similar technical concept, embodiments of this application provide a communication apparatus. The communication apparatus may be the network device or a chip in the network device in any possible design solution of the methods in the foregoing embodiments. The communication apparatus includes at least one corresponding unit that is in the communication methods provided in the foregoing embodiments and that is configured to perform the method step, the operation, or the behavior performed by the network device. The at least one unit may be disposed in one-to-one correspondence with the method step, the operation, or the behavior performed by the network device. These units may be implemented by using a computer program, may be implemented by using a hardware circuit, or may be implemented by using a computer program in combination with a hardware circuit.

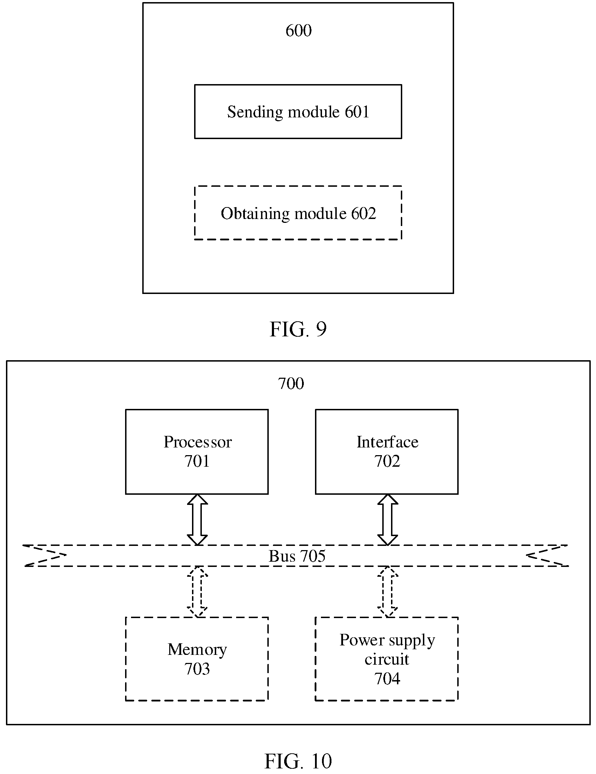

With reference to FIG. 9, the following describes the communication apparatus provided in this application. As shown in FIG. 9, a communication apparatus 600 may be used in a network device or a chip in the network device. The following specifically describes a structure and a function of the communication apparatus 600 by using different designs. Although names of modules in different designs are the same, structures and functions may be different.

The communication apparatus 600 may include a sending module 601. The sending module 601 is configured to send r pieces of cell configuration information of a first cell to a terminal, where r is a positive integer, each of the r pieces of cell configuration information includes a capability parameter of the first cell, and the capability parameter of the first cell indicates a wireless communication capability that needs to be supported by the terminal in the first cell. The sending module 601 is further configured to send an indication of first cell configuration information to the terminal, where the first cell configuration information is one of the r pieces of cell configuration information, and the first cell configuration information includes a first capability parameter of the first cell.

The communication apparatus 600 may further include an obtaining module 602. The obtaining module 602 is configured to receive wireless communication capability information from the terminal, where the wireless communication capability information indicates at least one frequency band combination that is capable of being supported by the terminal and a wireless communication capability that is capable of being supported by the terminal in the at least one frequency band combination.

In an implementation, the sending module 601 is specifically configured to send M pieces of cell configuration information to the terminal, where M is a positive integer, the cell configuration information includes a capability parameter of a cell corresponding to the cell configuration information, and the r pieces of cell configuration information are r of the M pieces of cell configuration information.

In an implementation, the sending module 601 is specifically configured to send first indication information to the terminal, where the first indication information indicates N of the M pieces of cell configuration information, N is a positive integer, the first cell configuration information is one of the N pieces of cell configuration information, and the first indication information includes the indication of the first cell configuration information.

In a possible design, the N pieces of cell configuration information respectively correspond to N cells, the N pieces of cell configuration information respectively include capability parameters of the N cells, the N cells belong to at least one frequency band in a first frequency band combination that is capable of being supported by the terminal, and the N pieces of cell configuration information need to satisfy that a sum of wireless communication capabilities that respectively need to be supported by the terminal in the N cells and that are indicated by the capability parameters of the N cells does not exceed a wireless communication capability that can be supported by the terminal in the first frequency band combination.

In a possible design, the first frequency band combination includes the frequency band to which the N cells belong and another frequency band.

In a possible design, the cell configuration information further includes status information, the status information indicates that a cell corresponding to the cell configuration information is in an activated state or a deactivated state, and in the N pieces of cell configuration information, there are P pieces of cell configuration information including status information indicating the activated state, where P is a positive integer.

In a possible design, the P pieces of cell configuration information respectively correspond to P cells, the P pieces of cell configuration information respectively include capability parameters of the P cells, the P cells belong to at least one frequency band in a first frequency band combination that is capable of being supported by the terminal, and the P pieces of cell configuration information need to satisfy that a sum of wireless communication capabilities that respectively need to be supported by the terminal in the P cells and that are indicated by the capability parameters of the P cells does not exceed a wireless communication capability that is capable of being supported by the terminal in the first frequency band combination.

In a possible design, the first frequency band combination includes the frequency band to which the P cells belong and another frequency band.

The wireless communication capability includes at least one of the following: a quantity of physical downlink control channels that are capable of being simultaneously processed, a quantity of control-resource set pools that are capable of being simultaneously processed, a quantity of physical downlink shared channels that are capable of being simultaneously processed, a quantity of physical uplink shared channels that are capable of being simultaneously processed, a quantity of physical uplink control channels that are capable of being simultaneously processed, a quantity of layers that are capable of being simultaneously processed, a quantity of streams that are capable of being simultaneously processed, a quantity of antenna ports that are capable of being simultaneously processed, a quantity of channels that are capable of being simultaneously processed, whether a single downlink control information based multiple transmission reception point feature is supported, or whether a multiple downlink control information based multiple transmission reception point feature is supported.

Based on the foregoing similar technical concept, embodiments of this application provide a communication system. The communication system may include a network device configured to perform any possible design solution in the methods in the foregoing embodiments and a terminal configured to perform any possible design solution in the methods in the foregoing embodiments. For example, the communication system may include the communication apparatus 500 and the communication apparatus 600.

As shown in FIG. 10, a communication apparatus 700 includes one or more processors 701, and optionally, further includes an interface 702. When related program instructions are executed in the at least one processor 701, the apparatus 700 may be enabled to implement the communication method provided in any one of the foregoing embodiments and any possible design thereof. The processor 701 may alternatively implement, through a logic circuit, the communication method provided in any one of the foregoing embodiments and any possible design thereof. The interface 702 may be configured to: receive the program instructions and transmit the program instructions to the processor 701. Alternatively, the interface 702 may be configured to: perform communication interaction between the apparatus 700 and another communication device, for example, exchange control signaling and/or service data. For example, the interface 702 may be configured to: receive a signal from an apparatus other than the apparatus 700, and transmit the signal to the processor 701; or send a signal from the processor 701 to a communication apparatus other than the apparatus 700. The interface 702 may be a code and/or data read/write interface circuit, or the interface 702 may be a signal transmission interface circuit between a communication processor and a transceiver, or a pin of a chip. Optionally, the communication apparatus 700 may further include at least one memory 703, and the memory 703 may be configured to store the related program instructions and/or data that are/is needed. Optionally, the apparatus 700 may further include a power supply circuit 704. The power supply circuit 704 may be configured to supply power to the processor 701. The power supply circuit 704 may be located in a same chip as the processor 701, or the power supply circuit 704 may be located in a chip other than a chip in which the processor 701 is located. Optionally, the apparatus 700 may further include a bus 705, and parts in the apparatus 700 may be interconnected through the bus 705.

It should be understood that the processor in this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logical device, a discrete hardware component, or the like. The general-purpose processor may be a microprocessor, or the processor may be any conventional processor or the like.

It may be further understood that the memory in this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, random access memories (random access memories, RAMs) in many forms are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The power supply circuit in embodiments of this application includes but is not limited to at least one of the following: a power supply line, a power supply subsystem, a power management chip, a power consumption management processor, or a power consumption management control circuit.

The interface in embodiments of this application may include a separate transmitter and/or a separate receiver, or the transmitter and the receiver may be integrated. The interface may operate under an indication of a corresponding processor. Optionally, the transmitter may correspond to a transmitter machine in a physical device, and the receiver may correspond to a receiver machine in the physical device.

It may be clearly understood by a person skilled in the art that, for the purpose of convenient and brief description, only division into the foregoing function modules is used as an example for description. During actual application, the foregoing functions may be allocated to different function modules for implementation based on a requirement. That is, an inner structure of an apparatus is divided into different function modules, to implement all or some of the foregoing functions. For a detailed working process of the foregoing system, apparatus, and unit, refer to a corresponding process in the foregoing method embodiments. Details are not described herein again.

In this application, it should be understood that the disclosed system, apparatus, and method may be implemented in another manner. For example, the foregoing apparatus embodiments are merely examples. For example, the division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

A person of ordinary skill in the art may be aware that, with reference to the units or algorithm operations in examples described in embodiments disclosed in this specification, this application can be implemented by hardware, software, or a combination of software and hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In this application, "implemented by software" may mean that a processor reads and executes program instructions stored in a memory to implement a function corresponding to the foregoing module or unit. The processor is a processing circuit that has a function of executing the program instructions, and includes but is not limited to at least one of the following: various types of processing circuits that can run the program instructions such as a CPU, a microprocessor, a DSP, a microcontroller unit (microcontroller unit, MCU), or an artificial intelligence processor. In some other embodiments, the processor may further include a circuit that has another processing function (for example, a hardware circuit, a bus, and an interface that are for hardware acceleration). The processor may be presented in a form of an integrated chip. For example, the processor may be presented in a form of an integrated chip whose processing function includes only a function of executing software instructions; or the processor may be presented in a form of a system-on-a-chip (system-on-a-chip, SoC). That is, on one chip, in addition to the processing circuit (which is usually referred to as a "core") that can execute the program instructions, another hardware circuit configured to implement a specific function is further included (certainly, the hardware circuit may also be separately implemented based on an ASIC or an FPGA). Correspondingly, in addition to the function of executing software instructions, processing functions may further include various hardware acceleration functions (for example, artificial intelligence (artificial intelligence, AI) computing, encoding and decoding, and compression and decompression).

In this application, "implemented by hardware" means that a function of the foregoing module or unit is implemented through a hardware processing circuit that does not have a function of processing program instructions. The hardware processing circuit may include a discrete hardware component, or may be an integrated circuit. To reduce power consumption and a size, an integrated circuit is usually used for implementation. The hardware processing circuit may include an ASIC or a programmable logic device (programmable logic device, PLD). The PLD may further include an FPGA, a complex programmable logic device (complex programmable logic device, CPLD), or the like. These hardware processing circuits may be a separately packaged semiconductor chip (for example, packaged into an ASIC), or may be integrated with another circuit (for example, a CPU or a DSP) and then packaged into a semiconductor chip. For example, a plurality of hardware circuits and CPUs may be formed on one silicon base, and are separately packaged into a chip, where the chip is also referred to as an SoC; or a circuit that is configured to implement an FPGA function and a CPU may be formed on a silicon base, and are separately packaged into a chip, where the chip is also referred to as a system-on-a-programmable-chip (system-on-a-programmable-chip, SoPC).

It should be noted that, when this application is implemented by software, hardware, or a combination of software and hardware, this application may be implemented by different software and hardware, and is not limited to being implemented only by one type of software or hardware. For example, one of the modules or units may be implemented by using the CPU, and another module or unit may be implemented by using the DSP. Similarly, when hardware is used for implementation, one of the modules or units may be implemented by using the ASIC, and another module or unit may be implemented by using the FPGA. Certainly, it is also not specified that some or all modules or units are implemented by using a same type of software (for example, by using the CPU) or a same type of hardware (for example, by using the ASIC). In addition, a person skilled in the art may know that, software usually has better flexibility but poorer performance than hardware, and hardware is exactly opposite. Therefore, a person skilled in the art may select software, hardware, or a combination thereof for implementation based on an actual requirement.

In the foregoing embodiments, the descriptions of each embodiment have respective focuses. For a part that is not described in detail in an embodiment, reference may be made to related descriptions in other embodiments. Embodiments of this application may be combined, or some technical features in embodiments may be decoupled from specific embodiments and combined with a conventional technology, to resolve the technical problem in embodiments of this application.

In this application, the units described as separate parts may or may not be physically separate, and parts displayed as units may or may not be physical units, that is, may be located in one position, or may be distributed on a plurality of network elements. A person skilled in the art may select some or all of the units according to actual requirements to achieve the objectives of the solutions in embodiments of this application.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, or the part contributing to the conventional technology, or all or a part of the technical solutions may be implemented in the form of a software product. The computer software product is stored in a storage medium and may include several instructions for instructing a computer device, for example, a personal computer, a server, or a network device, or a processor (processor) to perform all or a part of the operations of the methods in embodiments of this application. The foregoing storage medium may include: any medium that can store program code, such as a USB flash drive, a removable hard disk, a ROM, a RAM, a magnetic disk, or an optical disc, or a computer-readable storage medium.

In descriptions of this application, a term like "first", "second", "S201", or "S202" is merely for distinguishing and description and for ease of organizing this article. Different sequences or numbers do not have specific technical meanings, and cannot be understood as indicating or implying relative importance, or indicating or implying an execution sequence of operations.

The term "and/or" in this application describes only an association relationship between associated objects, and indicates that three relationships may exist. For example, "A and/or B" may indicate the following three cases: Only A exists; both A and B exist; or only B exists. A and B may be singular or plural. In addition, the character "/" in this specification indicates an "or" relationship between the associated objects.

In this application, "transmission" may include the following three cases: data sending, data receiving, or data sending and data receiving. In this application, "data" may include service data and/or signaling data.

In this application, the terms "include" or "have" and any variation thereof are intended to cover non-exclusive inclusion. For example, a process/method that includes a series of steps, or a system/product/device that includes a series of units is not necessarily limited to those expressly listed steps or units, but may include other steps or units not explicitly listed or inherent to these processes/methods/products/devices.

In descriptions of this application, unless otherwise specified, a quantity of nouns indicates "a singular noun or a plural noun", that is, "one or more". "At least one" indicates one or more. "At least one of the following: A, B, and C is included" may indicate that A is included, B is included, C is included, A and B are included, A and C are included, B and C are included, or A, B, and C are included, where A, B, and C may be singular or plural.

The foregoing descriptions are merely specific implementations of this application, but the protection scope of this application is not limited thereto. Any variation or replacement readily figured out by a person skilled in the art within the technical scope disclosed in this application shall fall within the protection scope of this application.

## Claims

1. A communication method, comprising:
receiving r pieces of cell configuration information of a first cell, wherein r is a positive integer, each of the r pieces of cell configuration information comprises a capability parameter of the first cell, and the capability parameter of the first cell indicates a wireless communication capability that needs to be supported by a terminal in the first cell;
receiving an indication of first cell configuration information, wherein the first cell configuration information is one of the r pieces of cell configuration information, and the first cell configuration information comprises a first capability parameter of the first cell; and
determining, as the wireless communication capability that needs to be supported by the terminal in the first cell, a wireless communication capability that needs to be supported by the terminal in the first cell and that is indicated by the first capability parameter.

2. The method according to claim 1, further comprising:
sending wireless communication capability information of the terminal, wherein the wireless communication capability information indicates at least one frequency band combination that is capable of being supported by the terminal and a wireless communication capability that is capable of being supported by the terminal in the at least one frequency band combination.

3. The method according to claim 1 or 2, wherein receiving the r pieces of cell configuration information of the first cell comprises:
receiving M pieces of cell configuration information, wherein M is a positive integer, the cell configuration information comprises a capability parameter of a cell corresponding to the cell configuration information, and the r pieces of cell configuration information are r of the M pieces of cell configuration information.

4. The method according to claim 3, wherein receiving the indication of the first cell configuration information comprises:
receiving first indication information, wherein the first indication information indicates N of the M pieces of cell configuration information, N is a positive integer, the first cell configuration information is one of the N pieces of cell configuration information, and the first indication information comprises the indication of the first cell configuration information.

5. The method according to claim 4, wherein the N pieces of cell configuration information respectively correspond to N cells, and the N pieces of cell configuration information respectively comprise capability parameters of the N cells; and
determining, as the wireless communication capability that needs to be supported by the terminal in the first cell, the wireless communication capability that needs to be supported by the terminal in the first cell and that is indicated by the first capability parameter comprises:
determining, as wireless communication capabilities that respectively need to be supported by the terminal in the N cells, wireless communication capabilities that respectively need to be supported by the terminal in the N cells and that are indicated by the capability parameters of the N cells.

6. The method according to claim 5, wherein the N cells belong to at least one frequency band in a first frequency band combination that is capable of being supported by the terminal, and a sum of the wireless communication capabilities that respectively need to be supported by the terminal in the N cells and that are indicated by the capability parameters of the N cells does not exceed a wireless communication capability that is capable of being supported by the terminal in the first frequency band combination.

7. The method according to claim 4, wherein the cell configuration information further comprises status information, the status information indicates that a cell corresponding to the cell configuration information is in an activated state or a deactivated state, and in the N pieces of cell configuration information, there are P pieces of cell configuration information comprising status information indicating the activated state, wherein P is a positive integer.

8. The method according to claim 7, wherein the P pieces of cell configuration information respectively correspond to P cells, and the P pieces of cell configuration information respectively comprise capability parameters of the P cells; and
determining, as the wireless communication capability that needs to be supported by the terminal in the first cell, the wireless communication capability that needs to be supported by the terminal in the first cell and that is indicated by the first capability parameter comprises:
determining, as wireless communication capabilities that respectively need to be supported by the terminal in the P cells, wireless communication capabilities that respectively need to be supported by the terminal in the P cells and that are indicated by the capability parameters of the P cells.

9. The method according to claim 8, wherein the P cells belong to at least one frequency band in a first frequency band combination that is capable of being supported by the terminal, and a sum of the wireless communication capabilities that respectively need to be supported by the terminal in the P cells and that are indicated by the capability parameters of the P cells does not exceed a wireless communication capability that is capable of being supported by the terminal in the first frequency band combination.

10. The method according to any one of claims 1 to 9, wherein the wireless communication capability comprises at least one of the following:
a quantity of physical downlink control channels PDCCHs that are capable of being simultaneously processed, a quantity of control-resource set pools CORESET pools that are capable of being simultaneously processed, a quantity of physical downlink shared channels PDSCHs that are capable of being simultaneously processed, a quantity of physical uplink shared channels PUSCHs that are capable of being simultaneously processed, a quantity of physical uplink control channels PUCCHs that are capable of being simultaneously processed, a quantity of layers that are capable of being simultaneously processed, a quantity of streams that are capable of being simultaneously processed, a quantity of antenna ports that are capable of being simultaneously processed, a quantity of channels that are capable of being simultaneously processed, whether a single downlink control information based multiple transmission reception point s-DCI m-TRP feature is supported, or whether a multiple downlink control information based multiple transmission reception point m-DCI m-TRP feature is supported.

11. The method according to any one of claims 1 to 10, wherein receiving the r pieces of cell configuration information of the first cell comprises: receiving, in the first cell, the r pieces of cell configuration information of the first cell.

12. The method according to any one of claims 1 to 11, wherein receiving the indication of the first cell configuration information comprises: receiving the indication of the first cell configuration information in the first cell.

13. The method according to any one of claims 1 to 12, wherein the indication of the first cell configuration information indicates a transmission configuration indicator TCI state associated with the first cell configuration information.

14. The method according to any one of claims 1 to 13, wherein the r pieces of cell configuration information of the first cell are carried in a radio resource control RRC message, and the indication of the first cell configuration information is carried in a medium access control MAC control element CE or downlink control information DCI.

15. A communication method, comprising:
sending r pieces of cell configuration information of a first cell, wherein r is a positive integer, each of the r pieces of cell configuration information comprises a capability parameter of the first cell, and the capability parameter of the first cell indicates a wireless communication capability that needs to be supported by a terminal in the first cell; and
sending an indication of first cell configuration information, wherein the first cell configuration information is one of the r pieces of cell configuration information, and the first cell configuration information comprises a first capability parameter of the first cell.

16. The method according to claim 15, wherein the method further comprises:
receiving wireless communication capability information, wherein the wireless communication capability information indicates at least one frequency band combination that is capable of being supported by the terminal and a wireless communication capability that is capable of being supported by the terminal in the at least one frequency band combination.

17. The method according to claim 15 or 16, wherein sending the r pieces of cell configuration information of the first cell comprises:
sending M pieces of cell configuration information, wherein M is a positive integer, the cell configuration information comprises a capability parameter of a cell corresponding to the cell configuration information, and the r pieces of cell configuration information are r of the M pieces of cell configuration information.

18. The method according to claim 17, wherein sending the indication of the first cell configuration information comprises:
sending first indication information, wherein the first indication information indicates N of the M pieces of cell configuration information, N is a positive integer, the first cell configuration information is one of the N pieces of cell configuration information, and the first indication information comprises the indication of the first cell configuration information.

19. The method according to claim 18, wherein the N pieces of cell configuration information respectively correspond to N cells, the N pieces of cell configuration information respectively comprise capability parameters of the N cells, the N cells belong to at least one frequency band in a first frequency band combination that is capable of being supported by the terminal, and a sum of wireless communication capabilities that respectively need to be supported by the terminal in the N cells and that are indicated by the capability parameters of the N cells does not exceed a wireless communication capability that is capable of being supported by the terminal in the first frequency band combination.

20. The method according to claim 18, wherein the cell configuration information further comprises status information, the status information indicates that a cell corresponding to the cell configuration information is in an activated state or a deactivated state, and in the N pieces of cell configuration information, there are P pieces of cell configuration information comprising status information indicating the activated state, wherein P is a positive integer.

21. The method according to claim 20, wherein the P pieces of cell configuration information respectively correspond to P cells, the P pieces of cell configuration information respectively comprise capability parameters of the P cells, the P cells belong to at least one frequency band in a first frequency band combination that is capable of being supported by the terminal, and a sum of wireless communication capabilities that respectively need to be supported by the terminal in the P cells and that are indicated by the capability parameters of the P cells does not exceed a wireless communication capability that is capable of being supported by the terminal in the first frequency band combination.

22. The method according to any one of claims 15 to 21, wherein the wireless communication capability comprises at least one of the following:
a quantity of physical downlink control channels PDCCHs that are capable of being simultaneously processed, a quantity of control-resource set pools CORESET pools that are capable of being simultaneously processed, a quantity of physical downlink shared channels PDSCHs that are capable of being simultaneously processed, a quantity of physical uplink shared channels PUSCHs that are capable of being simultaneously processed, a quantity of physical uplink control channels PUCCHs that are capable of being simultaneously processed, a quantity of layers that are capable of being simultaneously processed, a quantity of streams that are capable of being simultaneously processed, a quantity of antenna ports that are capable of being simultaneously processed, a quantity of channels that are capable of being simultaneously processed, whether a single downlink control information based multiple transmission reception point s-DCI m-TRP feature is supported, or whether a multiple downlink control information based multiple transmission reception point m-DCI m-TRP feature is supported.

23. The method according to any one of claims 15 to 22, wherein sending the r pieces of cell configuration information of the first cell comprises: sending, in the first cell, the r pieces of cell configuration information of the first cell.

24. The method according to any one of claims 15 to 23, wherein sending the indication of the first cell configuration information comprises: sending the indication of the first cell configuration information in the first cell.

25. The method according to any one of claims 15 to 24, wherein the indication of the first cell configuration information indicates a transmission configuration indicator TCI state associated with the first cell configuration information.

26. The method according to any one of claims 15 to 25, wherein the r pieces of cell configuration information of the first cell are carried in a radio resource control RRC message, and the indication of the first cell configuration information is carried in a medium access control MAC control element CE or downlink control information DCI.

27. A communication apparatus, comprising a processor and a memory, wherein the processor is coupled to the memory, the memory stores program code, and the processor executes the program code, to enable the communication apparatus to perform the method according to any one of claims 1 to 26.

28. A communication apparatus, comprising a processor and an interface, wherein the interface is configured to receive a signal and/or send a signal, and the processor implements the method according to any one of claims 1 to 26 by using a logic circuit or code instructions.

29. A computer-readable storage medium, wherein the computer-readable storage medium stores computer program instructions; and when the computer program instructions are executed by a processor, the method according to any one of claims 1 to 26 is implemented.

30. A computer program product, wherein the computer program product comprises program instructions; and when the program instructions are executed by a processor, the method according to any one of claims 1 to 26 is implemented.
